(19) Europäisches Patentamt / European Patent Office / Office européen des brevets

(11) **EP 3 306 989 B1**

(12) **EUROPEAN PATENT SPECIFICATION**

(45) Date of publication and mention
of the grant of the patent:
**25.03.2020  Bulletin 2020/13**

(21) Application number: **16814449.1**

(22) Date of filing: **23.06.2016**

(51) Int Cl.:
*H04W 52/18* (2009.01)   *H04W 52/32* (2009.01)
*H04W 52/14* (2009.01)

(86) International application number:
**PCT/JP2016/068702**

(87) International publication number:
**WO 2016/208680 (29.12.2016 Gazette 2016/52)**

(54) **USER TERMINAL, WIRELESS BASE STATION, AND WIRELESS COMMUNICATION METHOD**

BENUTZERENDGERÄT (UE), DRAHTLOSE BASISSTATION UND
DRAHTLOSKOMMUNIKATIONSVERFAHREN

TERMINAL D'UTILISATEUR, STATION DE BASE SANS FIL ET PROCÉDÉ DE COMMUNICATION
SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **24.06.2015  JP 2015126997**

(43) Date of publication of application:
**11.04.2018  Bulletin 2018/15**

(73) Proprietor: **NTT DOCOMO, INC.
Chiyoda-ku
Tokyo 100-6150 (JP)**

(72) Inventors:
• **TAKEDA, Kazuki
Tokyo 100-6150 (JP)**
• **NAGATA, Satoshi
Tokyo 100-6150 (JP)**
• **UCHINO, Tooru
Tokyo 100-6150 (JP)**

(74) Representative: **Hoffmann Eitle
Patent- und Rechtsanwälte PartmbB
Arabellastraße 30
81925 München (DE)**

(56) References cited:
EP-A1- 2 797 253       WO-A1-2014/091527
US-A1- 2012 208 583

• NTT DOCOMO ET AL: "Discussion on the new PUCCH format for up to 32 CCs", 3GPP DRAFT; R1-153194, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Fukuoka, Japan; 20150525 - 20150529 24 May 2015 (2015-05-24), XP050974009, Retrieved from the Internet: URL:http://www.3gpp.org/ftp/Meetings_3GPP_ SYNC/RAN1/Docs/ [retrieved on 2015-05-24]
• NTT DOCOMO, INC: 'Discussion on the new PUCCH format for up to 32 CCs' 3GPP TSG-RAN WG1 #81 RL-153194 16 May 2015, XP050974009
• NTT DOCOMO, INC: 'WF on PUSCH-like new PUCCH format' 3GPP TSG-RAN WG1 #82B RL-156124 07 October 2015, XP051045076
• NTT DOCOMO, INC: 'WF in another new PUCCH format including CDM' 3GPP TSG-RAN WG1 #82B R1-156125 07 October 2015, XP051044626

**Description**

Technical Field

The present invention relates to a user terminal, a radio base station and a radio communication method in next-generation mobile communication systems.

Background Art

In the UMTS (Universal Mobile Telecommunication System) network, the specifications of long term evolution (LTE) have been drafted for the purpose of further increasing high speed data rates, providing lower delays and so on (see non-patent literature 1). LTE Advanced (also referred to as LTE Rel. 10, 11 or 12) is specified for the purpose of further broadbandization and speed-up from LTE (also referred to as LTE Rel. 8), and a successor system (also referred to as LTE Rel. 13 or the like) is also under study.

The system band in LTE Rel. 10/11 includes at least one component carrier (CC), where the LTE system band of LTE Rel. 8 constitutes one unit. Such bundling of a plurality of CCs into a wide band is referred to as "carrier aggregation" (CA).

In LTE of Rel. 8 to 12, the specifications have been drafted assuming exclusive operations in frequency bands that are licensed to operators that is, licensed bands. For licensed bands, for example, 800 MHz, 2 GHz and/or 1.7 GHz have been in use.

In LTE of Rel. 13 and later versions, operation in frequency bands where license is not required -- that is, unlicensed bands -- is also a target of study. For unlicensed band, for example, 2.4 GHz, which is the same as in Wi-Fi, or the 5 GHz band and/or the like may be used. Although carrier aggregation (LAA: license-assisted access) between licensed bands and unlicensed bands is placed under study in Rel. 13 LTE, there is a possibility that, in the future, dual connectivity and unlicensed-band stand-alone will becomes targets of study as well.

Document US 2012 208583 A1 relates to a method for controlling uplink transmission power in a multi-carrier wireless communication system by enabling a transmission power control command to be accurately and efficiently provided in a wireless communication system.

Citation List

Non-Patent Literature

Non-Patent Literature 1: 3GPP TS 36.300 Rel.8 "Evolved Universal Terrestrial Radio Access (E-UTRA) and Evolved Universal Terrestrial Radio Access Network (E-UTRAN); Overall description; Stage 2"

Summary of Invention

Technical Problem

In the carrier aggregation of LTE Rel. 10-12, the number of component carriers that can be configured per user terminal is limited to maximum five. In carrier aggregation in and after LTE Rel. 13, a study is in progress to expand the number of CCs that can be configured per user terminal to six or more in order to realize further band expansion.

Now, in existing systems (Rel. 10 to 12), delivery acknowledgment information (HARQ-ACK) for downlink signals of each CC is transmitted on an uplink control channel (PUCCH: Physical Uplink Control Channel). In this case, the user terminal transmits the delivery acknowledgment information using existing PUCCH formats (for example, PUCCH formats 1a/1b/3, etc.) assuming five or fewer CCs.

However, existing PUCCH formats is not expected to be suitable when delivery acknowledgment information for a large number of CCs is transmitted as in the case where the number of CCs is expanded to six or more. Therefore, introduction of a PUCCH format (hereinafter referred to as "new PUCCH format") suitable for cases where the number of CCs is expanded to six or more is under study. On the other hand, when introducing the new PUCCH format, it may not be possible to properly control the transmission power of uplink control channels.

The present invention has been made in view of the above points, and it is therefore an object of the present invention to provide a user terminal, a radio base station and a radio communication method that can adequately control the transmission power of uplink control channels when the number of component carriers (CCs) that can be configured per user terminal is expanded more than in existing systems.

Solution to Problem

The mentioned problems are solved by the subject-matter of the independent claims. Further preferred embodiments are defined in the dependent claims.

According to an aspect, a user terminal has a transmission section that transmits an uplink control channel, and a control section that controls the transmission power of the uplink control channel, and the control section controls the transmission power of the uplink control channel based on at least one of the number of resource blocks constituting the format of the uplink control channel and the payload in the format including the cyclic redundancy check (CRC) bits.

Advantageous Effects of Invention

According to the present invention, it is possible to adequately control the transmission power of uplink control channels even when the number of component carriers (CCs) that can be configured per user terminal is expanded more than in existing systems.

Brief Description of Drawings

FIG. 1 is a diagram to explain carrier aggregation;
FIG. 2 is a diagram to show an example of a configuration of existing PUCCH formats 3;
FIGs. 3A and 3B are diagrams, each showing an example of a first configuration of a new PUCCH format;
FIGs. 4A and 4B are diagrams, each showing an example of a second configuration of a new PUCCH format;
FIGs. 5A and 5B are diagrams, each showing an example of a third configuration of a new PUCCH format;
FIGs. 6A and 6B are diagrams, each showing an example of a fourth configuration of a new PUCCH format;
FIGs. 7A and 7B are diagrams to explain an example of PUCCH transmission power control according to a first example;
FIGs. 8A and 8B are diagrams to explain another example of PUCCH transmission power control according to the first example;
FIG. 9 is a diagram to explain an example of PUCCH transmission power control according to a second example;
FIG. 10 is a diagram to explain an example of PUCCH transmission power control according to a third example;
FIG. 11 is a diagram to show an example of a schematic structure of a radio communication system according to an embodiment of the present invention;
FIG. 12 is a diagram to show an example of an overall structure of a radio base station according to the present embodiment;
FIG. 13 is a diagram to show an example of a functional structure of a radio base station according to the present embodiment;
FIG. 14 is a diagram to show an example of an overall structure of a user terminal according to the present embodiment; and
FIG. 15 is a diagram to show an example of a functional structure of a user terminal according to the present embodiment.

Description of Embodiments

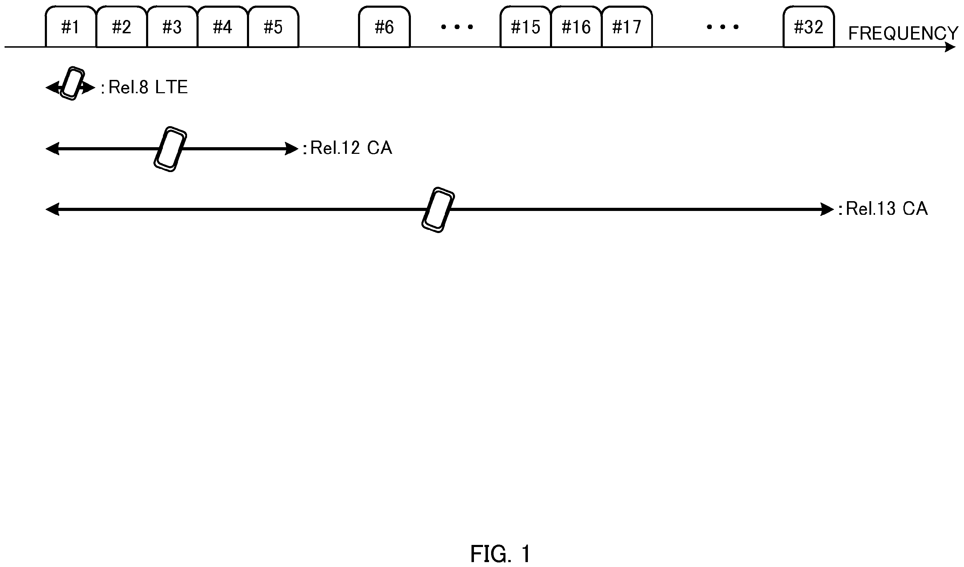

FIG. 1 is a diagram to explain carrier aggregation (CA). As shown in FIG. 1, in CA of up to LTE Rel. 12, maximum five component carriers (CCs) (CC #1 to CC #5) are bundled, where the system band of LTE Rel. 8 constitutes one unit. That is, in carrier aggregation up to LTE Rel. 12, the number of CCs that can be configured in a user terminal (UE: User Equipment) is limited to maximum five (one primary cell and maximum four secondary cells).

Meanwhile, in carrier aggregation of LTE Rel. 13, a study is in progress to further expand the band by bundling six or more CCs. That is, in carrier aggregation of LTE Rel. 13, expansion of the number of CCs (cells) that can be configured per user terminal to six or more (CA enhancement) is under study. For example, as shown in FIG. 1, when 32 CCs (CC #1 to CC #32) are bundled, a bandwidth of maximum 640 MHz can be secured.

In this way, more flexible and faster radio communication is expected to be made possible by increasing the number of CCs that can be configured in a user terminal. Also, expanding the number of CCs like this is an effective way to widen the band in carrier aggregation (LAA: License-Assisted Access) between licensed bands and unlicensed bands. For example, when five licensed band CCs (= 100 MHz) and fifteen unlicensed band CCs (= 300 MHz) are bundled, a bandwidth of 400 MHz can be secured.

Meanwhile, when the number of CCs that can be configured in a user terminal is expanded to six or more (for example, 32), it is difficult to directly apply the transmission methods (for example, PUCCH formats) used in existing systems (Rel. 10 to 12) on an as-is basis.

For example, in existing systems (LTE Rel. 10 to 12), the user terminal transmits uplink control information (UCI) using an uplink control channel (PUCCH: Physical plink control channel). Here, the UCI includes at least one of delivery acknowledgment information (HARQ-ACK: Hybrid Automatic Repeat reQuest-ACK) in response to the downlink shared channel (PDSCH: Physical Downlink Shared Channel) of each CC, channel state information (CSI) to show channel states, and a scheduling request (SR) for an uplink shared channel (PUSCH: Physical Uplink Shared Channel).

In existing systems, PUCCH formats 1/1a/1b, 2/2a/2b, and 3 (collectively referred to as "existing PUCCH formats") are supported as PUCCH formats (hereinafter referred to as "PUCCH formats"). PUCCH format 1 is used to transmit SR. PUCCH formats 1a/1b/1b with channel selection and 3 are used to transmit HARQ-ACKs for five or fewer CCs. PUCCH formats 2/2a/2b are used to transmit CSI for a specific CC. PUCCH formats 2a/2b may be used to transmit HARQ-ACKs in addition to CSI for a particular CC. PUCCH format 3 may be used to transmit SR and/or CSI in addition to HARQ-ACKs.

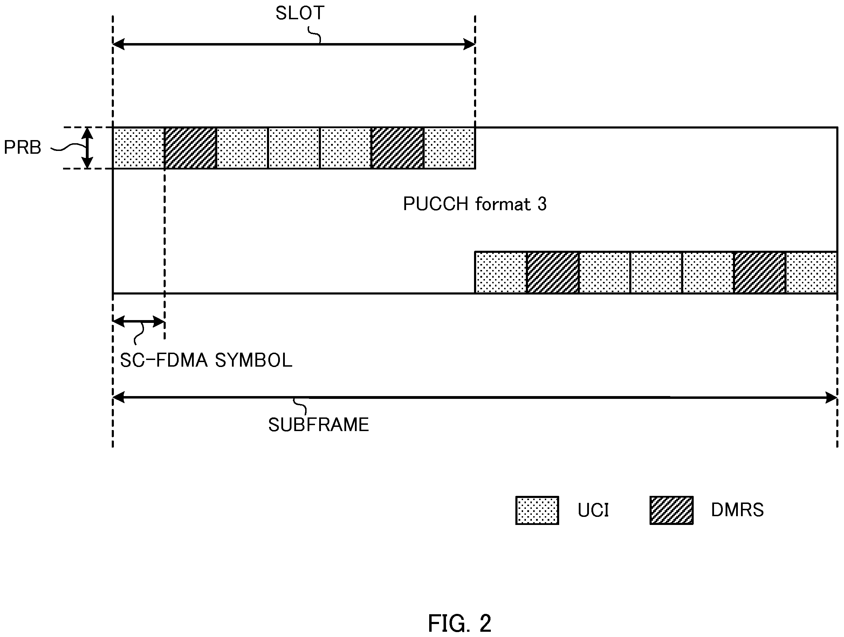

FIG. 2 is a diagram showing an example of the configuration of PUCCH format 3, having the maximum payload among existing PUCCH formats. With PUCCH format 3, it is possible to transmit UCI up to 10 bits in FDD and up to 22 bits in TDD (HARQ-ACKs for up to 5 CCs, for example). As shown in FIG. 2, PUCCH format 3 is composed of two demodulation reference signal (DMRS: DeModulation Reference Signal) symbols and five SC-FDMA (Single Carrier Frequency Divisional Multiple Access) symbols per slot. The same bit sequence is mapped to the SC-FDMA symbols in a slot, and these SC-FDMA symbols are multiplied by spreading codes (orthogonal codes, also referred to as "OCC: Orthogonal Cover Codes") so that a plurality of user terminals can be multiplexed.

Also, cyclic shifts (hereinafter also referred to as "CSs") that vary between user terminals are applied to the DMRSs in each slot. By applying orthogonal codes and cyclic shifts, it is possible to code-division-multiplex (CDM) up to five PUCCH formats 3 on the same resource (PRB). For example, it is possible to orthogonal-multiplex HARQ bit sequences using different OCC sequences per user terminal, and orthogonal-multiplex DMRSs by using different CS sequences per user.

However, when the number of CCs that can be configured per user terminal is expanded to six or more (for example, 32), PUCCH format 3 may not be able to provide sufficient payload, and it may not be possible to transmit UCI with respect to all the scheduled CCs.

For example, in FDD, when transmitting HARQ-ACKs of two codewords (transport blocks) for 32 CCs, a PUCCH format capable of transmitting 64 bits is necessary. Further, in TDD, when HARQ-ACKs of two codewords are transmitted for 32 CCs and four uplink subframes correspond to one uplink subframe, a PUCCH format capable of transmitting 128 bits (when spatial bundling is applied) or 256 bits is required.

Therefore, in order to make it possible to transmit UCI (for example, HARQ-ACKs) for six or more CCs, a study is in progress to introduce a PUCCH that can transmit a larger number of bits (payload and capacity) than existing PUCCH formats (hereinafter referred to as "new PUCCH format").

Now, in existing systems (LTE Rel. 10 to 12), the transmission power of the PUCCH is controlled based on the PUCCH format and the amount of information (payload) transmitted in the PUCCH format. To be more specific, the transmission power $P_{PUCCH}(i)$ of the PUCCH in subframe i is controlled based on equation 1:

$$P_{PUCCH}(i) = \min \left\{ \begin{array}{l} P_{CMAX,c}(i), \\ P_{0\_PUCCH} + PL_c + h(n_{CQI}, n_{HARQ}, n_{SR}) + \Delta_{F\_PUCCH}(F) + \Delta_{TxD}(F') + g(i) \end{array} \right\} \quad [dBm]$$

$$\ldots (Equation\ 1)$$

Here, $P_{CMAX,c}(i)$ is the maximum transmission power in subframe i of a serving cell c (also referred to as "CC" or "cell"). $P_{0\_PUCCH}$ is a parameter (offset) reported by higher layer. $PL_c$ is the path loss of the user terminal in the serving cell c.

Also, h ($n_{CQI}$, $n_{HARQ}$, $n_{SR}$) (hereinafter also simply referred to as "h") is a value (offset) depending on the PUCCH format. $n_{CQI}$ is the number of CQI bits. $n_{HARQ}$ is the number of HARQ-ACK bits. $n_{SR}$ is the number of SR field bits for sending the scheduling request. h can also be seen as an offset based on the payload of the PUCCH format.

For example, in the case of PUCCH format 1/1a/1b, h = 0. When downlink carrier aggregation is performed in PUCCH format 1b based on channel selection, h = ($n_{HARQ}$ - 1)/2. When normal cyclic prefixes (CPs) are used in PUCCH formats 2/2a/2b, h = $10\log_{10}$ ($n_{CQI}$/4) when $n_{CQI} \geqq 4$, and h = 0 when $n_{CQI} < 4$. When extended CPs are used in PUCCH format 2, h = $10\log_{10}$ ($n_{CQI} + n_{HARQ}$/4) in the case of $n_{CQI} + n_{HARQ}$ ? 4, and h = 0 in the case of $n_{CQI} + n_{HARQ} < 4$.

Also, when HARQ-ACK and SR are transmitted in PUCCH format 3 and two antennas are used or if the number of transmitted bits is larger than 11 bits, h = ($n_{HARQ} + n_{SR}$-1)/3 holds. In the case where HARQ-ACK and SR are transmitted in PUCCH format 3, h = $(n_{HARQ} + n_{SR} + n_{CQI}-1)/2$ if one antenna is used and the number of transmitted bits is not more than 11 bits. Also, when HARQ-ACK, SR, and CSI are transmitted in PUCCH format 3, h = $(n_{HARQ} + n_{SR} + n_{CQI}-1)/3$ if two antennas are used and the number of transmitted bits is more than 11 bits. In the case where HARQ-ACK, SR and CSI are transmitted in PUCCH format 3, h = $(n_{HARQ} + n_{SR} + n_{CQI}-1)/2$ when one antenna is used and the number of transmitted bits is not more than 11 bits.

Further, $\Delta_{F\_PUCCH}(F)$ is a parameter (offset) based on the PUCCH format, and is reported by higher layer. $\Delta_{TxD}(F')$ is a parameter (offset) based on the presence or absence of transmission diversity (whether or not transmission is performed using two antenna ports), and is reported by higher layer. g(i) is the cumulative value of TPC commands.

In PUCCH formats 1a/1b, 2/2a/2b and 3, a plurality of user terminals are code-division-multiplexed (CDM), so that, in the above equation 1, the path loss compensation factor $\alpha$, by which the path loss $PL_c$ is multiplied, is fixed to 1.

However, in the above equation 1, when the above-described new PUCCH formats are introduced, the transmission power of the PUCCH may not be adequately controlled. In view of the above, the present inventors have come up with the idea of controlling the transmission power of PUCCH taking into consideration the configuration of a new PUCCH format when the number of CCs that can be configured per user terminal is expanded to six or more.

Now, embodiments of the present invention will be described in detail below. Note that, although examples in which the number of CCs that can be configured per user terminal in carrier aggregation is 32 will be described below, this is by no means limiting. Also, CCs may be referred to as "cells" or "serving cells."

<Configuration of new PUCCH format>

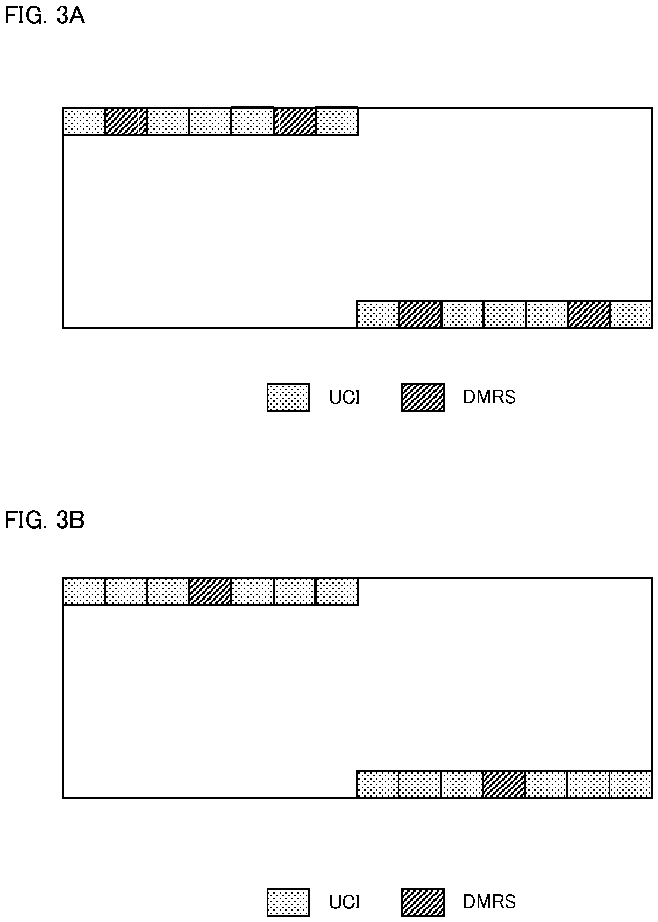

With reference to FIGs. 3 to 6, the configuration of the new PUCCH format used in this embodiment will be described. As described above, a new PUCCH format is a transmission format that can transmit a larger number of bits (payload and capacity) than existing PUCCH formats can. Note that a new PUCCH format may be referred to as "PUCCH format 4," "large capacity PUCCH format," "enhanced PUCCH format," "new format," and the like.

In addition, conditions for new PUCCH formats may include (1) the maximum number of bits that can be transmitted is 128 bits or more, (2) a cyclic redundancy check (CRC) is added to HARQ-ACK transmission when the number of transmission bits including HARQ-ACK and/or SR is equal to or larger than a predetermined value (for example, 23 bits) and (3) TBCC (Tail-Biting Convolutional Coding) and rate matching, introduced in LTE Release 8, are applied when the number of transmission bits including HARQ-ACK and/or SR is equal to or larger than a predetermined value (for example, 23 bits).

Also, the number (types) of new PUCCH formats may be one or more. For example, when HARQ-ACKs for six CCs is transmitted using a new PUCCH format that is capable of transmitting HARQ-ACKs for 32 CCs, the overhead increases. Therefore, a plurality of new PUCCH formats that can transmit varying numbers of bits (that is, have different payloads) -- for example, a first new PUCCH format capable of transmitting HARQ-ACKs for 6 CCs and a second new PUCCH format capable of transmitting HARQ-ACKs for up to 32 CCs -- may be provided. Alternatively, a single new PUCCH format may be provided to avoid complication of control.

Further, the positions and the number of DMRSs arranged in a new PUCCH format may be the same as or different from those of PUCCH format 3. By increasing the number of DMRSs to arrange in a new PUCCH format, channel estimation can be performed with high accuracy even in an environment with low SINR or in a high-speed moving environment. On the other hand, if the number of DMRSs is reduced, the payload (the number of bits that can be transmitted) can be increased, so that higher coding gain can be obtained.

FIGs. 3 provide diagrams, each showing an example of a first configuration of a new PUCCH format (the number and positions of DMRSs). As shown in FIG. 3A, in a new PUCCH format, DMRSs may be allocated to the second and sixth SC-FDMA symbols (time symbols) in each slot as in the case of PUCCH format 3 (see FIG. 2). Alternatively, as shown in FIG. 3B, in a new PUCCH format, a DMRS may be placed in the fourth SC-FDM symbol of each slot.

The positions of DMRSs in a new PUCCH format are not limited to the positions shown in FIGs. 3A and 3B, and DMRSs may be located in any SC-FDMA symbol in each slot. Further, the number of DMRSs in a new PUCCH format is not limited to the numbers shown in FIGs. 3A and 3B (2 or 1 per slot), and may be 3 or more per slot.

Also, the frequency resources (also referred to as "physical resource blocks" (PRBs), "resource blocks," etc., and hereinafter referred to as "PRBs") to use for a new PUCCH format may be the same as in PUCCH format 3, or may be larger than in PUCCH format 3. Increasing the number of PRBs to use in a new PUCCH format reduces the payload per PRB, so that, although the coding gain can be increased, the overhead increases.

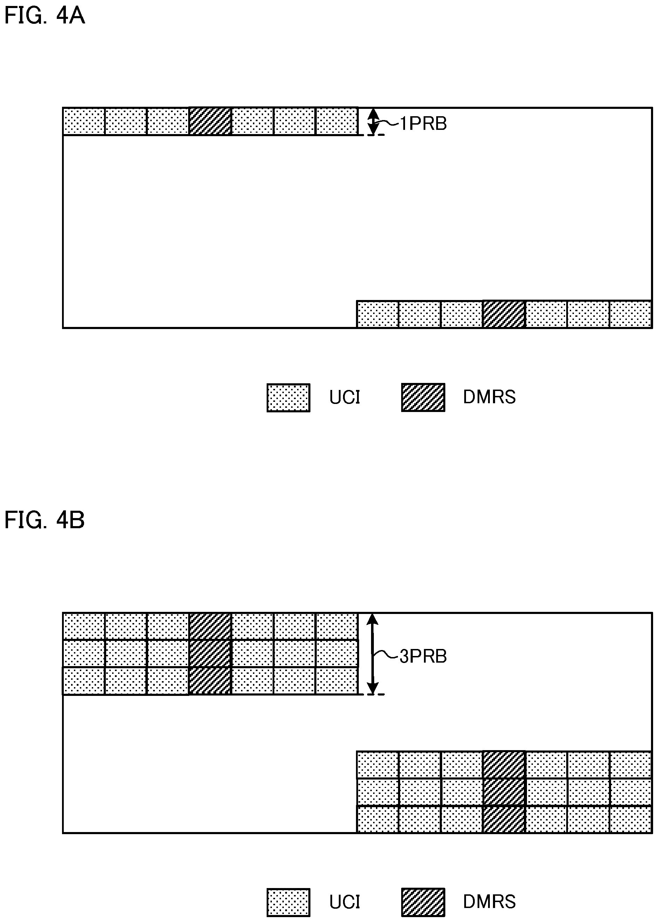

FIGs. 4 provide diagrams, each showing an example of a second configuration of a new PUCCH format (the number of PRBs). As shown in FIG. 4A, when using a new PUCCH format, one PRB may be used per slot, as in the case of using PUCCH format 3 (see FIG. 2), or frequency hopping may be applied between slots. Alternatively, as shown in FIG. 4B, when using a new PUCCH format, multiple PRBs may be used per slot (three PRBs in FIGs. 4), and frequency hopping may be applied between slots.

It should be noted that the number of PRBs used in a new PUCCH format is not limited to the numbers shown in FIGs. 4A and 4B, and may be two PRBs per slot, four PRBs per slot or more. In FIGs. 4A and 4B, frequency hopping is applied between slots, but it is equally possible not to apply frequency hopping. Also, the positions and the number of DMRSs are not limited to those shown in FIGs. 4A and 4B.

Also, in a new PUCCH format, a plurality of user terminals may be code-division-multiplexed (CDM), frequency-division-multiplexed (FDM) and/or time-division-multiplexed (TDM). When code division multiplexing is used, although multiple user terminals can be accommodated in the same PRB, the payload per user terminal becomes smaller, which makes it difficult to obtain coding gain.

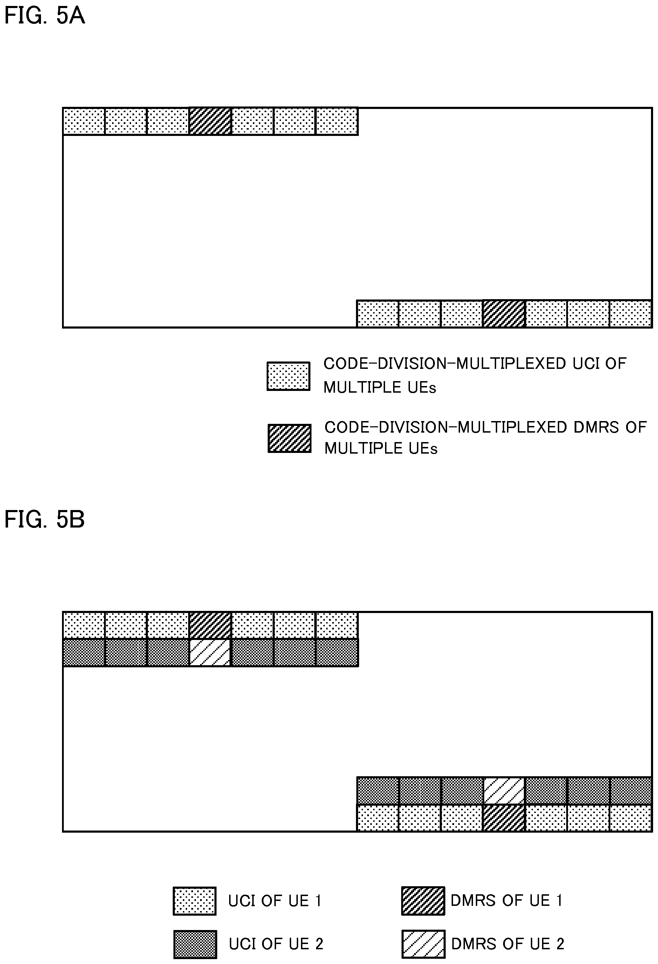

FIGs. 5 provide diagram, each showing an example of a third configuration of a new PUCCH format (method of multiplexing a plurality of user terminals). As shown in FIG. 5A, in a new PUCCH format, a plurality of user terminals may be code-division-multiplexed. To be more specific, as in the case of using PUCCH format 3 (see FIG. 2), it is possible to orthogonally-multiplex UCIs of a plurality of user terminals using different spreading codes (OCC) for each user terminal, and it is possible to orthogonally-multiplex the DMRSs of a plurality of user terminals by applying different cyclic shifts for each user terminal.

Alternatively, as shown in FIG. 5B, in a new PUCCH format, a plurality of user terminals may be frequency-division-multiplexed. To be more specific, UCIs and DMRSs of a plurality of user terminals may be mapped to different PRBs.

The method of multiplexing a plurality of user terminals in a new PUCCH format is not limited to the multiplexing method shown in FIGs. 4A and 4B. For example, a plurality of user terminals may be time-division-multiplexed, or may be time-division-multiplexed and frequency-division-multiplexed. Also, a plurality of user terminals may be space-division-multiplexed.

In addition, the spreading factor (orthogonal code length) to use in a new PUCCH format may be the same as in PUCCH format 3 or may be smaller than in PUCCH format 3. When the spreading factor to use in a new PUCCH format is decreased, although the payload per user terminal (the number of bits that can be transmitted) increases, the number of user terminals that can be multiplexed decreases.

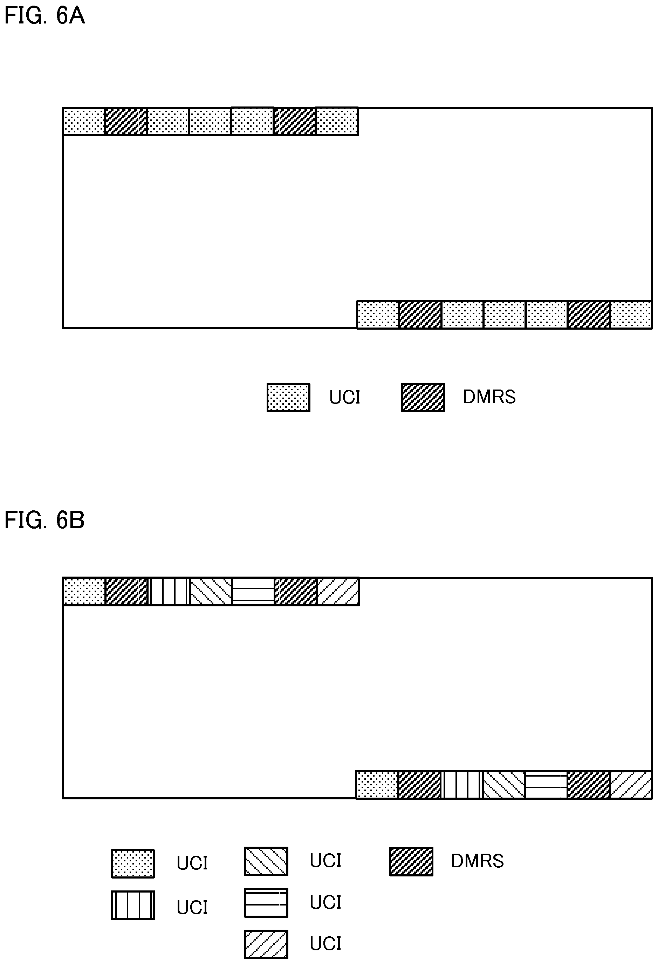

FIGs. 6 provide diagrams showing an example of a fourth configuration of a new PUCCH format (spreading factor). As shown in FIG. 6A, in the new PUCCH format, like PUCCH format 3, the same bit sequence is mapped to each SC-FDMA symbol, excluding DMRSs, and, in order to multiplex a plurality of user terminals, these SC-FDMA symbols may be multiplied by different spreading codes for each user terminal. Alternatively, as shown in FIG. 6B, a different bit sequence may be mapped to each SC-FDMA symbol, except DMRSs, by setting the spreading factor to, for example, 1. In the case of FIG. 6B, the bit sequence length that can be transmitted is five times as long as FIG. 6A, but the number of user terminals that can be multiplexed is limited to one.

In a new PUCCH format, instead of orthogonally-multiplexing a plurality of user terminals using different spreading codes for each user terminal as in PUCCH format 3 (see FIG. 2), UCIs of multiple CCs of a user terminal may be orthogonally-multiplexed using different spreading codes for each CC configured for the user terminal.

Further, the modulation scheme to use in a new PUCCH format may be BPSK (Binary Phase Shift Keying) or QPSK (Quadrature Phase Shift Keying), which are used in existing PUCCH formats, or may be an m-ary modulation scheme such as 16 QAM (Quadrature Amplitude Modulation) or above.

Each of the above examples of configurations of new PUCCH formats may be used alone, may be used in combination with at least another one, or may be changed as appropriate to a format other than the above. For example, in a new PUCCH format, reference signals (for example, SRS (Sounding Reference Signal)) other than the DMRS may be arranged.

Further, when uplink carrier aggregation is configured, conventional PUCCH formats or new PUCCH formats may be configured in the user terminal in each of two or more CCs. In this case, two or more cell groups (CG), including respective CCs in which a PUCCH format is configured, are configured in the user terminal, and HARQ-ACK feedback is controlled, per CG, in each PUCCH format.

(Radio communication method)

In the radio communication method according to the present embodiment, the user terminal controls the transmission power of the PUCCH based on at least one of the number of PRBs constituting the PUCCH format (the number of resource blocks), the result of multiplication of a compensation factor, which is configured smaller than 1, and path loss, the payload in the PUCCH format, including the CRC bits, and the payload in the PUCCH format, not including the CRC bits.

Hereinafter, transmission power control based on the number of PRBs (first example), transmission power control based on the multiplication result of a compensation factor, which is configured smaller than 1, and path loss (second example), and transmission power control based on the presence/absence of CRC bits (third example) will be described in detail. Note that the transmission power control according to the first to third examples may be used alone, or at least two of them may be used in combination.

The transmission power control according to the present embodiment is not limited to the first to third examples. In the present embodiment, the transmission power of the PUCCH may be controlled in various ways based on the above-described configurations of new PUCCH formats (including, for example, the number and positions of DMRSs (FIG. 3), the number of PRBs (FIG. 4), the scheme for multiplexing a plurality of users (FIGs. 5), the presence or absence of CRC bits, the number and positions of SRSs, the spreading factor (FIG. 6), the modulation scheme, the order of mapping information bit sequences to radio resources, and the like). Equations 2 to 5 to be described later are merely examples, and parameters may be added/deleted/changed.

When the transmission power control according to the present embodiment is applied, power headroom is also calculated on the assumption of the corresponding transmission power control. That is, when the transmission power control according to the present embodiment is adopted, when calculating the power headroom to report to the radio base station, the user terminal can subtract the transmission power calculated based on the transmission power control according to the present embodiment from the maximum transmission power $P_{CMAx,c}(i)$ from subframe i of the serving cell c ("CC," "cell," etc.), and report the result of this reported to the radio base station as the power headroom.

Here, power headroom is surplus transmission power of the user terminal. The surplus transmission power may be calculated based on the maximum transmission power and the transmission power of the PUSCH (for example, by subtracting the transmission power of the PUSCH from the maximum transmission power) (type 1), or the surplus transmission power may be calculated based on the maximum transmission power and the transmission power of the PUSCH and the PUCCH (for example, by subtracting the transmission power of the PUSCH and the PUCCH from maximum transmission power) (type 2). In the case of type 2, the surplus transmission power of the user terminal can be calculated using the transmission power of the PUCCH controlled by the transmission power control according to the present embodiment.

<First Example>

In the first example, transmission power control based on the number of PRBs will be described. If the new PUCCH format is comprised of multiple PRBs (see FIGs. 4), the payload per PRB can be lowered, so that the coding gain can be increased. On the other hand, when the new PUCCH format is composed of a plurality of PRBs, according to equation 1 above, the transmission power (transmission energy) per PRB becomes (1/the number of PRBs), and therefore there is a fear that performance improvement effect by the transmission power control cannot be achieved. Therefore, in the first example, the user terminal controls the transmission power of the PUCCH based on the number of PRBs constituting the PUCCH format.

More specifically, when the PUCCH format is composed of a plurality of PRBs, the user terminal may control the transmission power of the PUCCH based on the number of the PRBs so that the transmission power per PRB is constant. For example, the user terminal may control the transmission power of the PUCCH based on an offset that increases according to (or in proportion to) the number of PRBs.

When the new PUCCH format is composed of a plurality of PRBs, the user terminal may control the transmission power of the PUCCH based on the payload per PRB, which is calculated based on the number of the PRBs.

For example, the user terminal controls the transmission power $P_{PUCCH}(i)$ of the PUCCH in subframe i based on equation 2:

$$P_{\text{PUCCH}}(i) = \min \left\{ \begin{array}{l} P_{\text{CMAX},c}(i), \\ 10\log_{10}(M_{\text{PUCCH},c}(i)) + P_{0\_\text{PUCCH}} + PL_c + h(n_{CQI}, n_{HARQ}, n_{SR})/M_{\text{PUCCH},c}(i) + \Delta_{\text{F\_PUCCH}}(F) + \Delta_{TxD}(F'') + g(i) \end{array} \right.$$

... (Equation 2)

Here, $M_{PUCCH,c}(i)$ is the number of PRBs constituting the PUCCH format in subframe i. For example, in existing PUCCH formats, $M_{PUCCH,c}(i)$ is one, and in the new PUCCH format, $M_{PUCCH,c}(i)$ is one or more. Since $P_{CMAX,c}(i)$, $P_{0\_PUCCH}$, $PL_c$, h ($n_{CQI}$, $n_{HARQ}$, $n_{SR}$), $\Delta_{F\_PUCCH}(F)$, $\Delta_{TxD}(F')$, and g(i) are the same as those in equation 1, explanation will be omitted.

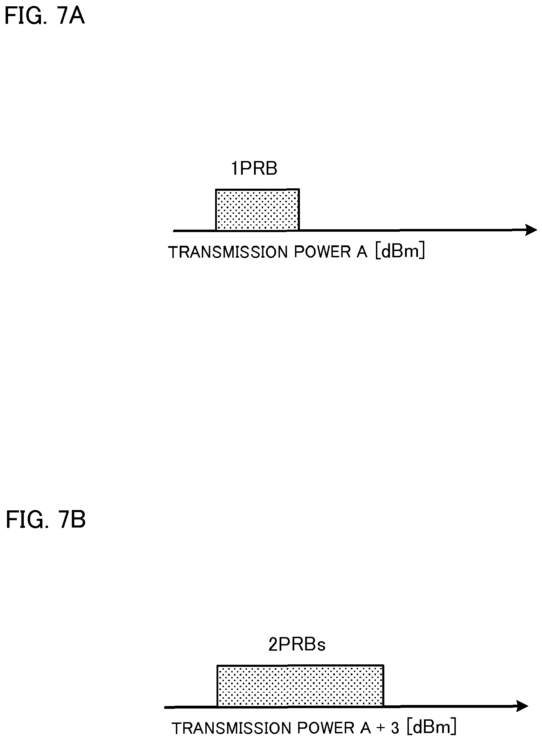

In equation 2 above, $10\log_{10}(M_{PUCCH,c}(i))$ is taken into consideration. Consequently, in FIG. 7A, assuming that A (dBm) is the transmission power of the PUCCH format composed of one PRB, the transmission power in the PUCCH format composed of two PRBs is A + $10\log_{10}2$ ($\approx$3) (dBm). In this case, as shown in FIG. 7B, the transmission power of the two-PRB PUCCH format is twice the transmission power of the one-PRB PUCCH format.

In this way, by controlling the transmission power of the PUCCH using an offset (for example, $10\log_{10}$

($M_{PUCCH,c}(i)$) that increases in accordance with an increase in the number of PRBs, reduction in transmission power per PRB can be prevented. As a result, even when the new PUCCH format is composed of a plurality of PRBs, an effect of performance improvement can be expected.

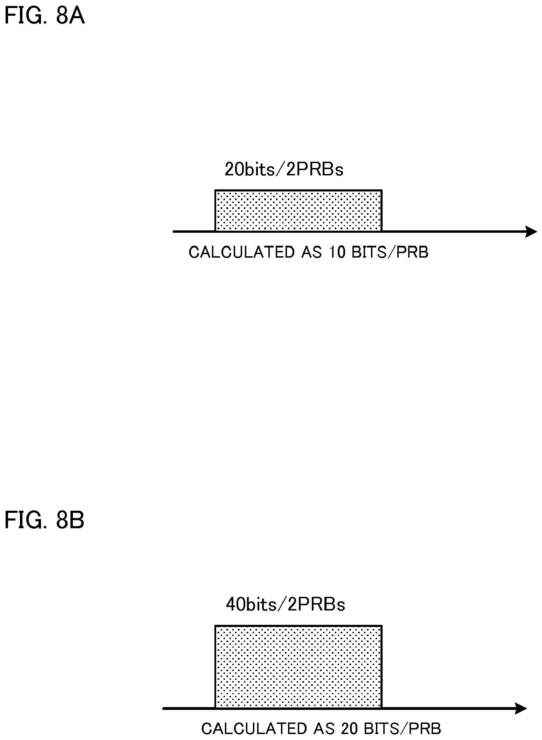

Also, in equation 2, h ($n_{CQI}$, $n_{HARQ}$, $n_{SR}$)/$M_{PUCCH,c}(i)$ is taken into consideration as the transmission power offset (parameter) depending on the payload per PRB. Therefore, when the new PUCCH format is composed of two PRBs, the transmission power (transmission energy) in the case of 20 bits per PRB (FIG. 8B) is controlled to be larger than in the case of 10 bits per PRB (FIG. 8A). In comparison with a new PUCCH format with the same payload and a different number of PRBs, control is performed so that the transmission power increases as the number of PRBs decreases.

In general, the required received SINR that satisfies a given error rate (such as bit error rate or block error rate, for example) depends on the payload per number (or bandwidth) of received PRBs. In this manner, the transmission power of the PUCCH is controlled using an offset (for example, ($h_{CQI}$, $n_{HARQ}$, $n_{SR}$)/$M_{PUCCH,c}(i)$) that increases in accordance with an increase in the payload per number of PRBs, so that it is possible to introduce a transmission power offset that adequately copes with an increase or decrease in the required SINR caused by a payload increase/decrease per PRB. Therefore, even when the new PUCCH format is composed of a plurality of PRBs, a performance improvement effect can be expected.

Alternatively, the user terminal may control the transmission power $P_{PUCCH}$ (i) of the PUCCH in subframe i based on equation 3.

$$P_{\text{PUCCH}}(i) = \min \left\{ \begin{array}{l} P_{\text{CMAX,c}}(i), \\ 10 \log_{10}(M_{\text{PUCCH,c}}(i)) + P_{0\_\text{PUCCH}} + PL_c + h(\tilde{n}_{CQI}, \tilde{n}_{HARQ}, \tilde{n}_{SR}) + \Delta_{\text{F\_PUCCH}}(F) + \Delta_{TxD}(F') + g(i) \end{array} \right\}$$

$$\text{where} \quad \tilde{n}_{CQI} = n_{CQI} / M_{\text{PUCCH,c}}(i), \quad \tilde{n}_{HARQ} = n_{HARQ} / M_{\text{PUCCH,c}}(i), \quad \tilde{n}_{SR} = n_{SR} / M_{\text{PUCCH,c}}(i),$$

$$\text{... (Equation 3)}$$

Here, $n_{CQI}$ is the number of CQI bits. $n_{HARQ}$ is the number of HARQ-ACK bits. $n_{SR}$ is the number of SR field bits (hereinafter abbreviated as "SR") for sending scheduling requests, and is usually composed of one bit (in the case of PUCCH format 3, the user terminal transmits 1 or 0 as the SR bit depending on whether or not there is an uplink scheduling request). In addition, $M_{PUCCH,c}(i)$ is the same as in above equation 2, and $P_{CMAX,c}(i)$, $P_{0\_PUCCH}$, $PL_c$, $\Delta_{F\_PUCCH}(F)$, $\Delta_{TxD}(F')$ and g(i) are the same as in above equation 1, and therefore their explanation will be omitted.

In equation 3 above, as the offset increasing according to the increase in payload per number of PRBs, function h, which is based on the number of CQI bits per PRB (for example, $n_{CQI}/M_{PUCCH,c}(i)$), the number of HARQ-ACK bits per PRB (for example, $n_{HARQ}/M_{PUCCH,c}(i)$) and the SR per PRB (for example, $n_{SR}/M_{PUCCH,c}(i)$) is used. In this case, compared to the above offset h ($n_{CQI}$, $n_{HARQ}$, $n_{SR}$)/$M_{PUCCH,c}(i)$, the offset h can be represented more accurately as a function of the payload per PRB, so that it is possible to more appropriately set the transmission power offset matching the required SINR according to the payload per PRB.

Alternatively, the transmission power offset may be more generically expressed, as a function of CQI, HARQ, SR payload and the number of PUCCH PRBs, such as h ($n_{CQI}$, $n_{HARQ}$, $n_{SR}$, $M_{PUCCH,c}(i)$).

In the first example, the user terminal may determine the number of PRBs to constitute the PUCCH format based on reporting information by higher layer signaling and/or downlink control information (DCI) transmitted in the downlink control channel (PDCCH or EPDCCH).

Here, the reporting information (control information) based on higher layer signaling may include, for example, at least one of the number of CCs configured in the user terminal, the maximum number of MIMO (Multiple Input and Multiple Output) layers per CC (transmission mode (TM)), and the UL-DL configuration per CC (uplink subframe and downlink subframe configurations in TDD).

Also, the above DCI may include at least one of the total number of CCs scheduled, among the CCs configured in the user terminal (TDAI: Total Downlink Assignment Indicator), the cumulative number of scheduled CCs (ADAI: Accumulated Downlink Assignment Indicator), and a bitmap indicating scheduled CCs among the CCs configured in the terminal. Note that these pieces of information may be included in DCI that schedules the PDSCH.

Alternatively, in the first example, the user terminal may determine the payload based on reporting information by higher layer signaling and/or the above DCI, or the user terminal may determine the number of PRBs constituting the new PUCCH format based on the determined payload.

Alternatively, in the first example, the number of PRBs constituting the PUCCH format may be reported directly to the user terminal by higher layer signaling. In this case, regardless of the payload that changes dynamically, the number of PRBs is semi-statically fixed.

As described above, in the first example, the transmission power of the PUCCH using the new PUCCH format is controlled based on the number of PRBs constituting the PUCCH format, so that, even when the new PUCCH format is composed of multiple PRBs, a performance improvement effect can be expected.

<Second Example>

In a second example, transmission power control based on the multiplication result of a compensation factor, which is configured smaller than 1, and path loss, will be described. When the new PUCCH format is configured such that a plurality of user terminals are frequency-division-multiplexed and/or time-division-multiplexed (see FIG. 5B), unlike when a plurality of user terminals are code-division-multiplexed (see FIG. 5A), inter-symbol interference (near-far problem in the cell), caused by the difference in received quality at the radio base station between user terminals, does not occur. Therefore, unlike equation 1 above, it is not necessary to fix the compensation factor $\alpha$ (hereinafter referred to as "path loss compensation factor"), by which the path loss $PL_c$ is multiplied, to 1, in order to keep the received quality (target received power) at the radio base station constant.

Therefore, in the second example, when the PUCCH format is configured such that a plurality of user terminals are subjected to frequency division multiplexing and/or time division multiplexing, the transmission power of the PUCCH is controlled based on the multiplication result of the path loss compensation factor (compensation factor) $\alpha$, which is configured smaller than 1, with path loss.

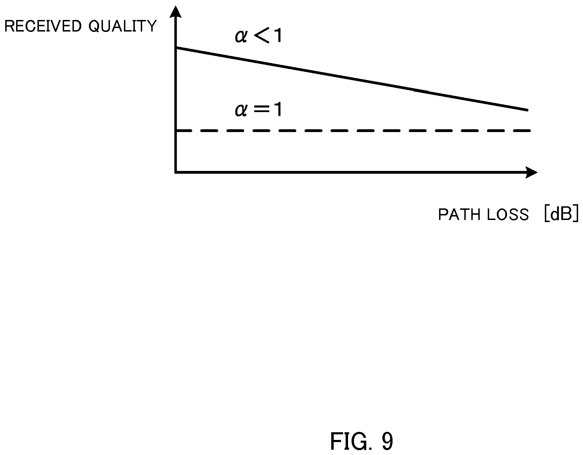

As shown in FIG. 9, in the case where the path loss compensation factor $\alpha$ is fixed to 1, the received quality (target received power) at the radio base station is constant regardless of the magnitude of path loss (that is, the distance from the cell center). On the other hand, when the path loss compensation factor $\alpha$ is configured smaller than 1, a user terminal with lighter path loss (a user terminal closer to the center of the cell) has higher transmission power and has better received quality at the radio base station.

In this manner, the transmission power is controlled based on the multiplication result of a path loss compensation factor, which is configured smaller than 1, with path loss, it is possible to make the transmission power bigger when the path loss is smaller. Given that the user terminal is more likely to be subject to more downlink scheduling wen the path loss is lighter (when the user terminal is closer to the cell center), the above control makes it possible to improve the throughput of the user terminal when having good received quality, and it is possible to obtain higher best-effort performance.

For example, the user terminal may control the transmission power $P_{PUCCH}$ (i) of the PUCCH in subframe i based on equation 4:

$$P_{\mathrm{PUCCH}}(i) = \min\left\{\begin{array}{l} P_{\mathrm{CMAX},c}(i), \\ P_{\mathrm{0\_PUCCH}} + \alpha \cdot PL_c + h\left(n_{CQI}, n_{HARQ}, n_{SR}\right) + \Delta_{\mathrm{F\_PUCCH}}(F) + \Delta_{TxD}(F') + g(i) \end{array}\right\}$$

$$\dots \ (Equation\ 4)$$

Here, $\alpha$ is a path loss compensation factor, and $0 \leqq \alpha \leqq 1$. For example, in existing PUCCH formats, $\alpha = 1$, and, in the new PUCCH format, $\alpha < 1$. Since $P_{CMAX,c}(i)$, $P_{0\_PUCCH}$, $PL_c$, h ($n_{CQI}$, $n_{HARQ}$, $n_{SR}$), $\Delta_{F\_PUCCH}(F)$, $\Delta_{TxD}(F')$, and g(i) are the same as those in equation 1, explanation will be omitted.

In the second example, the value of the path loss compensation factor $\alpha$, which is configured smaller than 1, may be reported (or configured) to the user terminal by higher layer signaling. When value of the path loss compensation factor $\alpha$ is not reported by higher layer signaling, or when an existing PUCCH formats is used, the user terminal may use $\alpha = 1$.

Also, the user terminal may control the value of the path loss compensation factor $\alpha$ based on the PUCCH format and the payload. For example, the user terminal may use $\alpha = 1$ when using existing PUCCH formats, and, when using the new PUCCH format, the user terminal may set $\alpha$ to a value reported by higher layer signaling.

In addition, when a plurality of new PUCCH formats are introduced, the value of the path loss compensation factor $\alpha$ for each new PUCCH format may be reported to the user terminal by higher layer signaling. In this case, the value of the path loss compensation factor $\alpha$ may be different in each new PUCCH format.

Alternatively, a plurality of different path loss compensation factors $\alpha$ may be reported to the user terminal by higher layer signaling depending on the payload (the size of the information bit sequence) included in one new PUCCH format.

As described above, in the second example, the transmission power of the PUCCH using the PUCCH format is controlled based on the multiplication result of the path loss compensation factor $\alpha$, which is configured to be less than 1, with path loss, so that the transmission power increases as the path loss decreases. As a result, it is possible to improve the throughput of the user terminal with good received quality, and it is possible to improve the best effort performance.

<Third Example>

In a third example, transmission power control based on the presence or absence of CRC bits will be described. In the new PUCCH format, when more than a predetermined number of information bits (for example, at least one of CQI, HARQ-ACK, and SR) are transmitted, CRC bits are added to the information bits (for example, at least one of CQI, HARQ-ACK, and SR).

This is because, by adding CRC bit to information bits, it is possible to easily detect information bit errors in the radio base station. When a CRC error is detected in the CQI, the radio base station judges that this CQI is invalid information, thereby avoiding scheduling based on false CQI information. Also, when a CRC error is detected in the HARQ-ACK, the radio base station sees all the HARQ-ACK bits as NACKs, so that the radio base station does not miss a retransmission request from the terminal.

In the following description, a case will be described where CRC bits are added to information bits comprised of 23 bits or more, but the number of information bits to which CRC bits are added is not limited to 23 bits or more. That is, the above predetermined number may be either 1 to 22 or 24 or more.

For example, when 23 or more HARQ-ACK bits are transmitted in the new PUCCH format, a study is in progress to add eight or more CRC bits to the HARQ-ACK bits. In this case, by error detection using the CRC bits, the radio base station can avoid erroneously detecting NACKs transmitted from the user terminal as ACKs (NACK-to-ACK error), so that the probability that the radio base station misses retransmission requests from the user terminal is reduced, and improved throughput can be expected.

Thus, the problem when a new PUCCH format is configured by adding CRC bits to a predetermined number or more of information bits is whether or not the CRC bits should be seen as a part of the payload. Therefore, in the third example, the user terminal controls the transmission power of the PUCCH based on payload including the CRC bits and based on payload not including the CRC bits.

To be more specific, when the PUCCH format is configured by adding CRC bits to a predetermined number or more of information bits, the user terminal may control the transmission power of the PUCCH based on the payload including the information bits and the CRC bits. By setting the payload including the CRC bits as a base, appropriate transmission power can be set according to the actual payload, so that it is easy to achieve the required SINR at the radio base station.

For example, the user terminal may control the transmission power $P_{\text{PUCCH}}(i)$ of the PUCCH in subframe i based on equation 5:

$$P_{\text{PUCCH}}(i) = \min\left\{\begin{array}{l} P_{\text{CMAX},c}(i), \\ P_{0\_\text{PUCCH}} + PL_c + h\left(n_{CQI}, n_{HARQ}, n_{SR}, n_{CRC}\right) + \Delta_{\text{F\_PUCCH}}(F) + \Delta_{TxD}(F') + g(i) \end{array}\right\}$$

$$(\text{Equation } 5)$$

Here, h ($n_{CQI}$, $n_{HARQ}$, $n_{SR}$, $n_{CRC}$) is an offset based on the payload including the CRC bits. $n_{CQI}$ is the number of CQI bits. $n_{HARQ}$ is the number of HARQ-ACK bits. $n_{SR}$ is the number of SR field bits for sending scheduling requests, which is usually composed of one bit (in the case of PUCCH format 3, the terminal transmits 1 or 0 as the SR bit depending on whether or not there is an uplink scheduling request). $n_{CRC}$ is the number of CRC bits to be added to information bits including at least one of HARQ-ACK, CQI and SR. The number of CRC bits may be a fixed value such as 8 bits or 16 bits, for example.

Also, in the case of a new PUCCH format, the weight of the CRC bits in comparison to the information bits (at least one of CQI, HARQ-ACK, and SR) may be taken into account in h ($n_{CQI}$, $n_{HARQ}$, $n_{SR}$, $n_{CRC}$). For example, an equation in which the payload of CQI, HARQ and SR and the payload of the CRC contribute to the offset in even weights, such as h ($n_{CQI}$, $n_{HARQ}$, $n_{SR}$, $n_{CRC}$) = ($n_{CQI}$ + $n_{HARQ}$ + $n_{SR}$ + $n_{CRC}$-1)/3 may be used, or an equation in which a weight to make the contribution of the CRC payload less than the payload of CQI, HARQ and SR, such as h ($n_{CQI}$, $n_{HARQ}$, $n_{SR}$, $n_{CRC}$) = ($n_{CQI}$ + $n_{HARQ}$ + $n_{SR}$ + $n_{CRC}$/8-1)/3 may be used. When using an equation in which the payload of CQI, HARQ, SR and the and payload of CRC contribute to the offset in equal weights, since optimal transmission power offset can be set for the payload including the CRC, it becomes easy to configure transmission power that can achieve the required SINR to fulfill the predetermined error rate before CRC check. On the other hand, when using an equation designed to multiply weights so that the contribution of the CRC payload is less than the pay load of CQI, HARQ and SR, by reducing the transmission power offset corresponding to the CRC that is not actually the information payload, it is possible to suppress an increase in interference against other cells and the like.

On the other hand, in the case of existing PUCCH formats, the value of h ($n_{CQI}$, $n_{HARQ}$, $n_{SR}$, $n_{CRC}$) may be defined the same as h ($n_{CQI}$, $n_{HARQ}$, $n_{SR}$) of equation 1. Since $P_{CMAX,c}(i)$, $P_{0\_PUCCH}$, $PL_c$, $\Delta_{F\_PUCCH}(F)$, $\Delta_{TxD}(F')$, and g(i) are the same as those in equation 1, explanation will be omitted.

Alternatively, when the PUCCH format is configured by adding CRC bits to a predetermined number or more of information bits, the user terminal may control the transmission power of the PUCCH based on the payload not including the CRC bits. By using the payload not including the CRC bit as a base, it is possible to configure appropriate transmission power according to the increase/decrease of information bits without being affected by CRC bits.

In this case, by newly defining h ($n_{CQI}$, $n_{HARQ}$, $n_{SR}$) for the new PUCCH format, the user terminal may control the transmission power $P_{PUCCH}(i)$ of the PUCCH in subframe i based on equation 1 above. For example, when the new PUCCH format is used, h ($n_{CQI}$, $n_{HARQ}$, $n_{SR}$) = ($n_{CQI}$ + $n_{HARQ}$ + $n_{SR}$-1)/3, h ($n_{CQI}$, $n_{HARQ}$, $n_{SR}$) = 2 × ($n_{CQI}$ + $n_{HARQ}$ + $n_{SR}$-1)/3 and the like can be used.

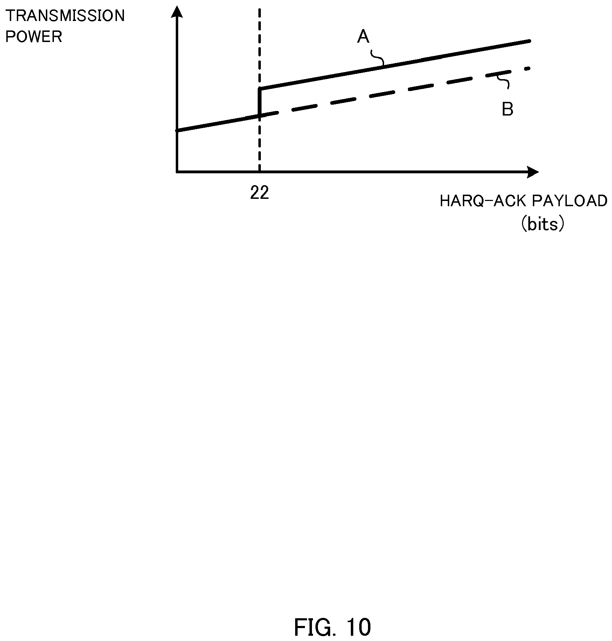

FIG. 10 is a diagram showing the relationship between the payload and the transmission power in the case where a fixed length of CRC bits are added to 22 or more HARQ-ACK bits in a new PUCCH format. As shown in FIG. 10, when an offset based on the payload including the CRC is used (A), transmission power equivalent to the fixed length of CRC bits is added from the 22nd bit onwards. On the other hand, when an offset based on the payload not including the CRC is used (B), the transmission power increases according to the number of HARQ-ACK bits. In a subframe in which an SR is configured, one SR bit is added, so that, when the offset based on the payload including the CRC is used (A), transmission power equivalent to the fixed length of CRC bits is added from the 23rd bit onwards. On the other hand, when the offset based on the payload not including the CRC is used (B), the transmission power increases according to the HARQ-ACK bits.

As described above, in the third example, the transmission power of the PUCCH using the PUCCH format is controlled based on payload including the CRC bits or based on payload not including the CRC bits, so that it is possible to configure transmission power that is suitable for a case where the PUCCH format is configured by adding CRC bits to a predetermined number or more of information bits.

(Radio Communication System)

Now, the structure of the radio communication system according to an embodiment of the present invention will be described below. In this radio communication system, the radio communication methods according to each embodiment of the present invention are employed. Note that the radio communication methods of the above-described embodiment may be applied individually or may be applied in combination.

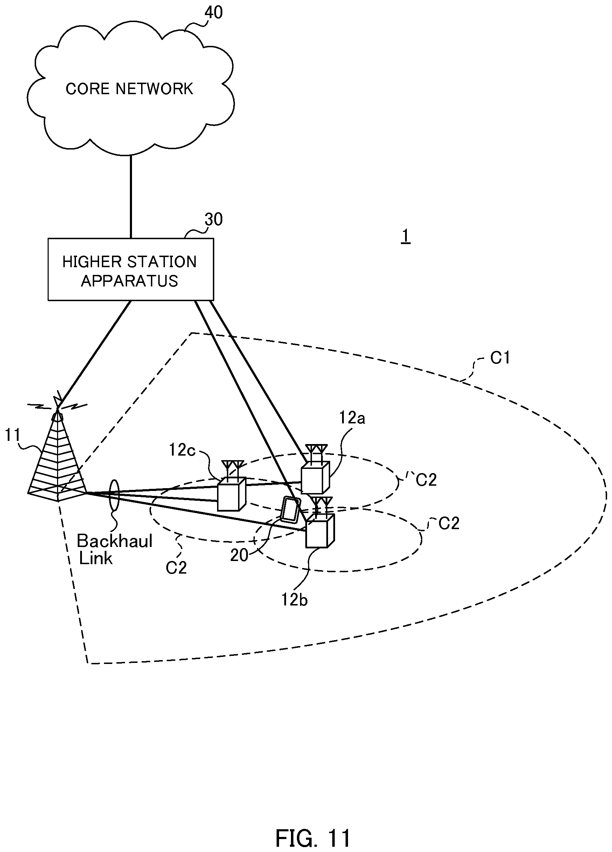

FIG. 11 is a diagram to show an example of a schematic structure of a radio communication system according to an embodiment of the present invention. The radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit. Note that the radio communication system 1 may be referred to as "SUPER 3G," "LTE-A" (LTE-Advanced), "IMT-Advanced," "4G," "5G," "FRA" (Future Radio Access) and so on.

The radio communication system 1 shown in FIG. 11 includes a radio base station 11 that forms a macro cell C1, and radio base station s 12a to 12c that form small cells C2, which are placed within the macro cell C1 and which are narrower than the macro cell C1. Also, user terminals 20 are placed in the macro cell C1 and in each small cell C2.

The user terminals 20 can connect with both the radio base station 11 and the radio base stations 12. The user terminals 20 may use the macro cell C1 and the small cells C2, which use different frequencies, at the same time, by means of CA or DC. Also, the user terminals 20 can execute CA or DC by using a plurality of cells (CCs) (for example, six or more CCs).

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Note that the configuration of the frequency band for use in each radio base station is by no means limited to these.

A structure may be employed here in which wire connection (for example, means in compliance with the CPRI (Common Public Radio Interface) such as optical fiber, the X2 interface and so on) or wireless connection is established between the radio base station 11 and the radio base station 12 (or between two radio base stations 12).

The radio base station 11 and the radio base stations 12 are each connected with a higher station apparatus 30, and are connected with a core network 40 via the higher station apparatus 30. Note that the higher station apparatus 30 may be, for example, an access gateway apparatus, a radio network controller (RNC), a mobility management entity (MME) and so on, but is by no means limited to these. Also, each radio base station 12 may be connected with higher station apparatus 30 via the radio base station 11.

Note that the radio base station 11 is a radio base station having a relatively wide coverage, and may be referred to as a "macro base station," a "central node," an "eNB" (eNodeB), a "transmitting/receiving point" and so on. Also, the radio base stations 12 are radio base stations having local coverages, and may be referred to as "small base stations," "micro base stations," "pico base stations," "femto base stations," "HeNBs" (Home eNodeBs), "RRHs" (Remote Radio Heads), "transmitting/receiving points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals or stationary communication terminals.

In the radio communication system 1, as radio access schemes, OFDMA (Orthogonal Frequency Division Multiple Access) is applied to the downlink, and SC-FDMA (Single-Carrier Frequency Division Multiple Access) is applied to the uplink. OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are by no means limited to the combination of these.

In the radio communication system 1, a downlink shared channel (PDSCH: Physical Downlink Shared CHannel), which is used by each user terminal 20 on a shared basis, a broadcast channel (PBCH: Physical Broadcast CHannel), downlink L1/L2 control channels and so on are used as downlink channels. User data, higher layer control information and predetermined SIBs (System Information Blocks) are communicated in the PDSCH. Also, the MIB (Master Information Blocks) is communicated in the PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI) including PDSCH and PUSCH scheduling information is communicated by the PDCCH. The number of OFDM symbols to use for the PDCCH is communicated by the PCFICH. HARQ delivery acknowledgement signals (ACKs/NACKs) in response to the PUSCH are communicated by the PHICH. The EPDCCH is frequency-division-multiplexed with the PDSCH (downlink shared data channel) and used to communicate DCI and so on, like the PDCCH.

In the radio communication system 1, an uplink shared channel (PUSCH: Physical Uplink Shared CHannel), which is used by each user terminal 20 on a shared basis, an uplink control channel (PUCCH: Physical Uplink Control CHannel), a random access channel (PRACH: Physical Random Access CHannel) and so on are used as uplink channels. User data and higher layer control information are communicated by the PUSCH. Uplink control information (UCI: Uplink Control Information) including at least one of delivery acknowledgment information (ACK/NACK) and radio quality information (CQI), is communicated by the PUSCH or the PUCCH. By means of the PRACH, random access preambles for establishing connections with cells are communicated.

<Radio base station>

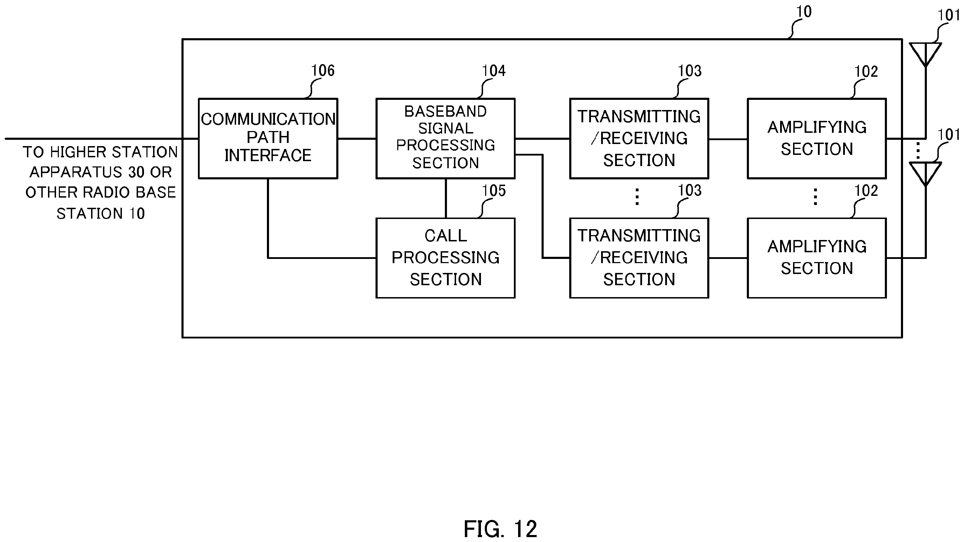

FIG. 12 is a diagram to show an example of an overall structure of a radio base station according to one embodiment of the present invention. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Baseband signals that are pre-coded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101.

The transmitting/receiving sections 103 can be constituted by transmitters/receivers, transmitting/receiving circuits or transmitting/receiving devices that can be described based on common understanding of the technical field to which the present invention pertains. Note that a transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing such as setting up and releasing communication channels, manages the state of the radio base station 10 and manages the radio resources.

The communication path interface section 106 transmits and receives signals to and from the higher station apparatus 30 via a predetermined interface. Also, the communication path interface 106 may transmit and/or receive signals (backhaul signaling) with other radio base stations 10 via an inter-base station interface (for example, an interface in compliance with the CPRI (Common Public Radio Interface), such as optical fiber, the X2 interface, etc.).

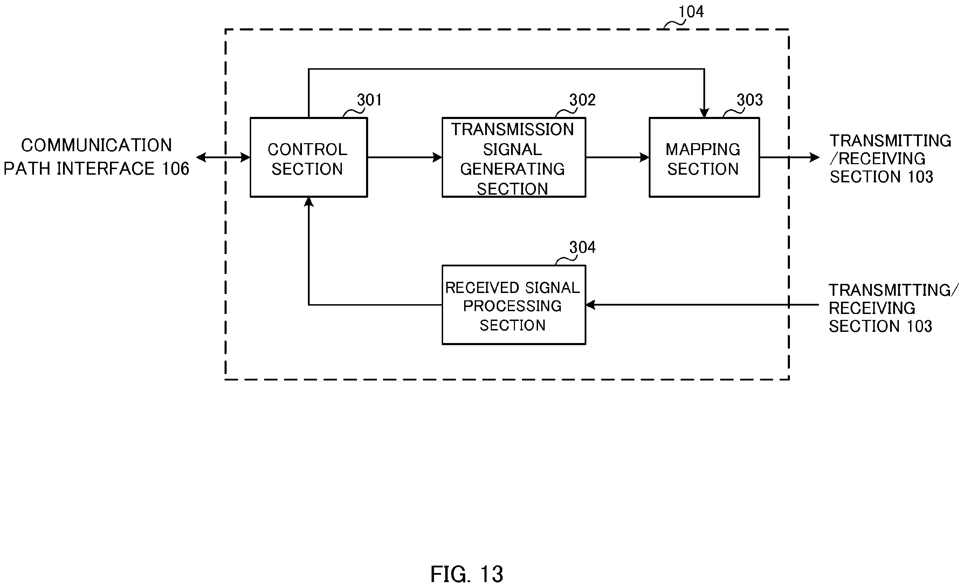

FIG. 13 is a diagram to show an example of a functional structure of a radio base station according to the present embodiment. Note that, although FIG. 13 primarily shows functional blocks that pertain to characteristic parts of the present embodiment, the radio base station 10 has other functional blocks that are necessary for radio communication as well. As shown in FIG. 13, the baseband signal processing section 104 has a control section 301, a transmission signal generation section 302, a mapping section 303 and a received signal processing section 304.

The control section 301 controls the entire radio base station 10. The control section 301 controls, for example, the generation of downlink signals by the transmission signal generation section 302, the mapping of signals by the mapping section 303, the signal receiving process by the received signal processing section 304, and the like.

To be more specific, the control section 301 controls the transmission of downlink user data (for example, controls the modulation scheme, the coding rate, the allocation of resources (scheduling), etc.) based on channel state information (CSI) that is reported from the user terminals 20.

Furthermore, the control section 301 controls the mapping of downlink control information (DCI), including information (DL/UL grant) for allocating resources to downlink/uplink user data and so on to a downlink control channel (PDCCH and/or EPDCCH). Also, the control section 301 controls the scheduling of downlink reference signals such as the CRS (Cell-specific Reference Signal), the CSI-RS (Channel State Information Reference Signal) and so on.

Furthermore, the control section 301 controls the carrier aggregation (CA) of the user terminal 20. To be more specific, the control section 301 may control the transmission signal generation section 302 to determine application of CA/changes in the number of CCs and so on, based on CSI or the like reported from the user terminals 20, and generate information to indicate such application/changes. Note that the information to indicate the application/changes may be included in control information sent by higher layer signaling.

Further, the control section 301 may control the maximum MIMO value per CC (transmission mode (TM)) and the UL/DL configuration of each CC in TDD. The maximum MIMO value and the UL/DL configuration may be included in control information (reporting information) that is reported to the user terminals 20 by higher layer signaling.

Further, the control section 301 may select at least one of the total number of CCs scheduled among the CCs configured in the user terminal 20 (TDAI), the cumulative number of scheduled CCs (ADAI) and a bitmap to show the CCs scheduled among the CCs configured in the user terminal 20. Note that these pieces of information may be included in DCI for scheduling the PDSCH.

Further, the control section 301 controls the parameters for use in transmission power control (closed loop control and/or open loop control) for the PUCCH. To be more specific, the control section 301 determines an increase/decrease value of transmission power control (TPC) commands based on the received quality of uplink signals from the user terminal 20. TPC commands may be included in that is DCI transmitted to the user terminal 20 by the PDCCH.

In addition, the control section 301 calculates a parameter based on the target received power at the radio base station (for example, $P_{0\_PUCCH}$ described above), a parameter based on the PUCCH format (for example, the above $\Delta_{F\_PUCCH}(F)$) and a parameter based on the presence or absence of transmission diversity (for example, the above-mentioned $\Delta_{TxD}(F')$). These parameters (power offset) may be included in control information (reporting information) reported to the user terminal 20 by higher layer signaling.

Further, the control section 301 may determine the number of PRBs constituting the PUCCH format (first example). The number of the PRBs may be included in control information (reporting information) reported to the user terminal 20 by higher layer signaling.

In addition, the control section 301 may determine the path loss compensation factor $\alpha$ (second example). The path loss compensation factor $\alpha$ may be included in control information (reporting information) reported to the user terminal 20 by higher layer signaling. To be more specific, the control section 301 may change whether or not to set the path loss compensation factor $\alpha$ smaller than 1, depending on the PUCCH format. For example, when a new PUCCH format is used, the control section 301 may configure the path loss compensation factor $\alpha$ smaller than 1, and the control section 301 may set the path loss compensation factor $\alpha$ to 1 when an existing PUCCH formats is used.

Also, when a new PUCCH format is configured so that a plurality of user terminals 20 are frequency-division-multiplexed and/or time-division-multiplexed, the control section 301 may set the path loss compensation factor $\alpha$ smaller than 1. Further, when a plurality of new PUCCH formats are configured, the control section 301 may configure a different path loss compensation factor $\alpha$ in each new PUCCH format. Also, when a single new PUCCH format is composed of a plurality of different payloads, the control section 301 may configure a different path loss compensation factor $\alpha$ in association with each payload in the new PUCCH format.

The control section 301 can be constituted by a controller, a control circuit or a control device that can be described based on common understanding of the technical field to which the present invention pertains.

The transmission signal generating section 302 generates downlink signals (downlink control signals, downlink data signals, downlink reference signals and so on) based on commands from the control section 301, and outputs these signals to the mapping section 303. To be more specific, the transmission signal generation section 302 generates downlink data signals (PDSCH) including the above-mentioned reporting information (control information) to be sent in higher layer signaling, user data and so on, and outputs the generated downlink data signals (PDSCH) to the mapping section 303. Further, the transmission signal generation section 302 generates downlink control signals (PDCCH) including the above-described DCI, and outputs the generated control signals to the mapping section 303. Furthermore, the transmission signal generation section 302 generates a downlink reference signal such as the CRS, the CSI-RS and so on, and outputs these signals to the mapping section 303.

For the transmission signal generation section 302, a signal generator, a signal generating circuit or a signal generating device that can be described based on common understanding of the technical field to which the present invention pertains can be used.

The mapping section 303 maps the downlink signals generated in the transmission signal generation section 302 to predetermined radio resources based on commands from the control section 301, and outputs these to the transmitting/receiving sections 103. For the mapping section 303, mapper, a mapping circuit or a mapping device that can be described based on common understanding of the technical field to which the present invention pertains can be used.

The received signal processing section 304 performs the receiving process (for example, demapping, demodulation, decoding and so on) of received signals that are input from the user terminals 20. The processing results are output to the control section 301. To be more specific, the received signal processing unit 304 detects the PUCCH format and performs the receiving process of UCI (at least one of HARQ-ACK, CQI and SR).

The receiving process section 304 can be constituted by a signal processor, a signal processing circuit or a signal processing device, and a measurer, a measurement circuit or a measurement device that can be described based on common understanding of the technical field to which the present invention pertains.

<User terminal>

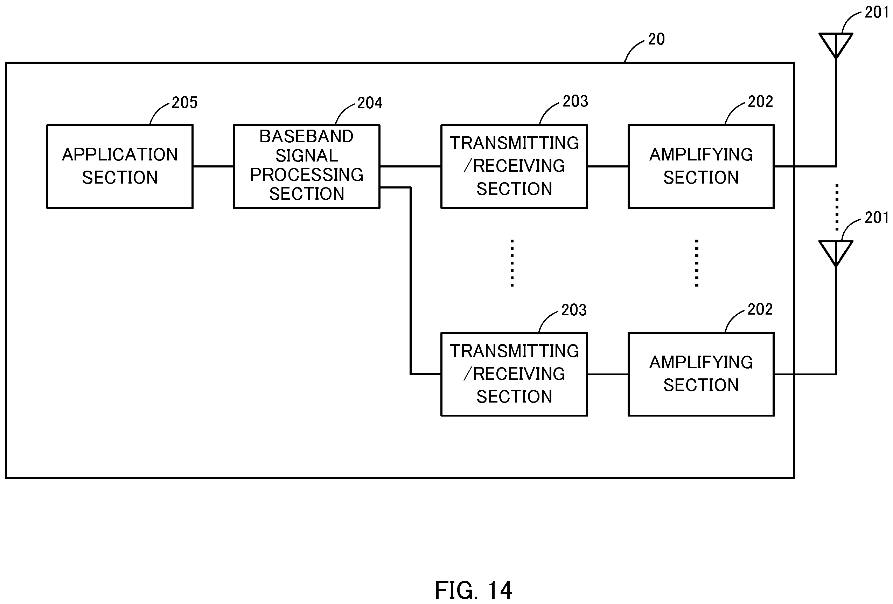

FIG. 14 is a diagram to show an example of an overall structure of a user terminal according to one embodiment of the present invention. A user terminal 20 has a plurality of transmitting/receiving antennas 201 for MIMO communication, amplifying sections 202, transmitting/receiving sections 203, a baseband signal processing section 204 and an application section 205.

Radio frequency signals that are received in a plurality of transmitting/receiving antennas 201 are each amplified in the amplifying sections 202. Each transmitting/receiving section 203 receives the downlink signals amplified in the amplifying sections 202. The received signal is subjected to frequency conversion and converted into the baseband signal in the transmitting/receiving sections 203, and output to the baseband signal processing section 204.

In the baseband signal processing section 204, the baseband signal that is input is subjected to an FFT process, error correction decoding, a retransmission control receiving process, and so on. Downlink user data is forwarded to the application section 205. The application section 205 performs processes related to higher layers above the physical layer and the MAC layer, and so on. Furthermore, in the downlink data, broadcast information is also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, pre-coding, a discrete Fourier transform (DFT) process, an IFFT process and so on, and the result is forwarded to each transmitting/receiving section 203. The baseband signal that is output from the baseband signal processing section 204 is converted into a radio frequency bandwidth in the transmitting/receiving sections 203. The radio frequency signals that are subjected to frequency conversion in the transmitting/receiving sections 203 are amplified in the amplifying sections 202, and transmitted from the transmitting/receiving antennas 201.

For the transmitting/receiving sections 203, transmitters/receivers, transmitting/receiving circuits or transmitting/receiving devices that can be described based on common understanding of the technical field to which the present invention pertains can be used. Furthermore, a transmitting/receiving section 203 may be structured as one transmitting/receiving section, or may be formed with a transmission section and a receiving section.

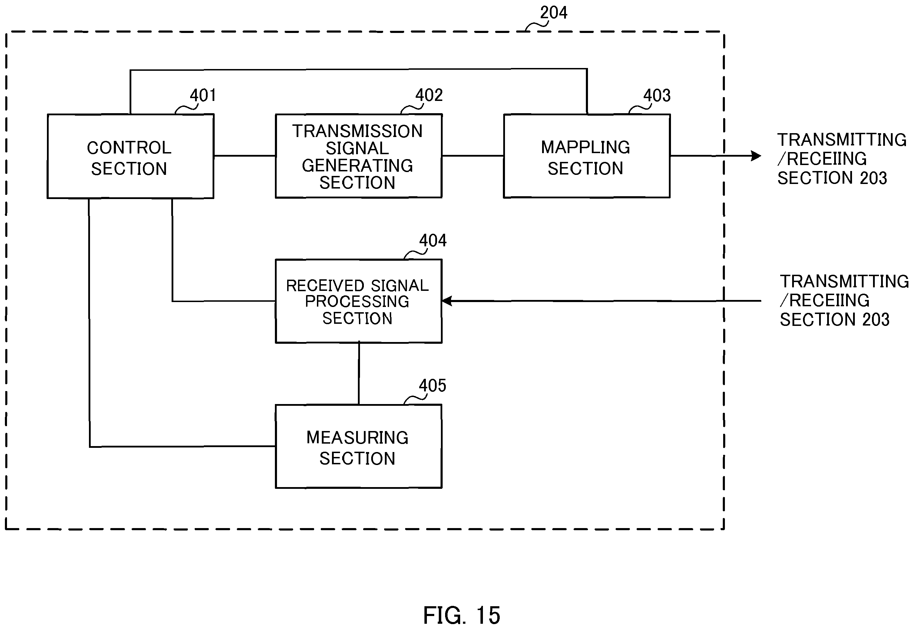

FIG. 15 is a diagram to show an example of a functional structure of a user terminal according to the present embodiment. Note that, although FIG. 15 primarily shows functional blocks that pertain to characteristic parts of the present embodiment, the user terminal 20 has other functional blocks that are necessary for radio communication as well. As shown in FIG. 15, the baseband signal processing section 204 provided in the user terminal 20 has a control section 401, a transmission signal generating section 402, a mapping section 403, a received signal processing section 404 and a measurement section 405.

The control section 401 controls the whole of the user terminal 20. The control section 401 controls, for example, the generation of signals in the transmission signal generation section 402, the mapping of signals in the mapping section 403, the signal receiving process in the received signal processing section 404, and so on.

To be more specific, the control section 401 controls the PUCCH format to apply to the transmission of UCI (at least one of HARQ-ACK, CQI and SR). To be more specific, the control section 401 determines whether to apply a new PUCCH format or apply an existing PUCCH format depending on the number of CCs configured in the user terminal 20 or the number of CCs scheduled in the user terminal 20. When a plurality of new PUCCH formats are provided, the control section 401 may decide which new PUCCH format is applied, according to the payload of UCI.

Further, the control section 401 controls the transmission power of the PUCCH based on at least one of the number of PRBs constituting the PUCCH format (first example), the multiplication result of a path loss compensation factor $\alpha$, which is configured less than 1, with path loss (second example), the payload in the PUCCH format, including the CRC bits (third example), and the payload in the PUCCH format, not including the CRC bits (third example).

In the first example, when the PUCCH format is composed of a plurality of PRBs, the control section 401 may control the transmission power of the PUCCH based on the number of PRBs so that the transmission power per PRB is constant. Also, when the new PUCCH format is composed of a plurality of PRBs, the control section 401 may control the transmission power of the PUCCH based on the payload per PRB calculated based on the number of PRBs. For example, the control section 401 may control the transmission power of the PUCCH using equation 2 or equation 3 described above.

In addition, in the first example, the number of PRBs constituting the PUCCH may be reported to the user terminal 20 by higher layer signaling. Alternatively, the control section 401 may determine the number of PRBs constituting the PUCCH format based on information reported by higher layer signaling (for example, the number of CCs configured in the user terminal 20, the maximum number of MIMO layers per CC (TM), the UL/DL configuration per CC), and/or based on DCI (for example, TDAI, ADIA, bitmap, described above). Alternatively, the control section 401 may determine the payload based on control information and/or DCI reported by higher layer signaling, and determine the number of PRBs based on the payload.

In the second example, when the PUCCH format is configured such that a plurality of user terminals 20 are frequency-division-multiplexed and/or time-division-multiplexed, the control section 401 controls the transmission power of the PUCCH based on the multiplication result of a path loss compensation factor $\alpha$ (compensation factor), configured smaller than 1, with path loss. For example, the control section 401 may control the transmission power of the PUCCH using equation 4 above.

Further, in the second example, the path loss compensation factor $\alpha$ may be reported to the user terminal 20 by higher layer signaling. In the case where the value of the path loss compensation factor $\alpha$ is not reported by higher layer signaling, or when using an existing PUCCH format, the control section 401 may use $\alpha = 1$.

In the third example, when the PUCCH format is configured by adding CRC bits to a predetermined number or more of information bits, the control section 401 may control the transmission power of the PUCCH based on the payload including the information bits and the CRC bits. For example, the control section 401 may control the transmission power of the PUCCH using equation 5 above. In this case, an offset based on the payload may be set in consideration of the weight of the CRC bits with respect to the information bits.

Alternatively, in the third example, when the PUCCH format is configured by adding CRC bits to a predetermined number or more of information bits, the user terminal may controls the transmission power of the PUCCH based on the payload not including the CRC bits. For example, the control section 401 may control the transmission power of the PUCCH using equation 1 above.

Note that, in addition to what is described above, the control section 401 may control transmission power in various ways based on the configuration of the new PUCCH format (for example, the number and positions of DMRSs (FIG. 3), the number of PRBs (FIG. 4), the method of multiplexing a plurality of user terminals (FIG. 5), the presence or absence of CRC bits, the number and positions of SRSs, the spreading factor (FIG. 6), the modulation scheme, the order of mapping information bit sequences to radio resource, etc.). Further, the control section 401 may calculate the surplus transmission power (PH: Power Headroom) based on the transmission power of the PUCCH controlled as described above and the maximum transmission power. The calculated surplus transmission power may be transmitted to the radio base station 10 (PHR: Power Headroom Report).

For the control section 401, a controller, a control circuit or a control device that can be described based on common understanding of the technical field to which the present invention pertains can be used.

The transmission signal generating section 302 generates uplink signals (uplink data signals, uplink controls signals, and so on) based on commands from the control section 401, and outputs these signals to the mapping section 403. For example, the transmission signal generation section 402 generates uplink control signals (PUCCH) including UCI (at least one of HARQ-ACK, CQI, and SR).

For the transmission signal generation section 402, a signal generator, a signal generating circuit or a signal generating device that can be described based on common understanding of the technical field to which the present invention pertains can be used.

The mapping section 403 maps the uplink signals (uplink control signals and/or uplink data signal) generated in the transmission signal generation section 402 to radio resources based on commands from the control section 401, and output the result to the transmitting/receiving sections 203. For the mapping section 403, mapper, a mapping circuit or a mapping device that can be described based on common understanding of the technical field to which the present invention pertains can be used.

The received signal processing section 404 performs the receiving process (for example, demapping, demodulation, decoding, etc.) of downlink signals (including downlink control signals and downlink data signals). The received signal processing section 404 outputs the information received from the radio base station 10, to the control section 401. The received signal processing section 404 outputs, for example, broadcast information, system information, control information by higher layer signaling such as RRC signaling, DCI, and the like, to the control section 401.

The received signal processing section 404 can be constituted by a signal processor, a signal processing circuit or a signal processing device that can be described based on common understanding of the technical field to which the present invention pertains. Also, the received signal processing section 404 can constitute the receiving section according to the present invention.

The measurement section 405 measures channel states based on reference signals (for example, CSI-RS) from the radio base station 10, and outputs the measurement results to the control section 401. Channel state measurements may be performed per CC.

The measurement section 405 can be constituted by a signal processor, a signal processing circuit or a signal processing device, and a measurer, a measurement circuit or a measurement device that can be described based on common understanding of the technical field to which the present invention pertains.

Note that the block diagrams that have been used to describe the above embodiments show blocks in functional units. These functional blocks (components) may be implemented in arbitrary combinations of hardware and software. Also, the means for implementing each functional block is not particularly limited. That is, each functional block may be implemented with one physically-integrated device, or may be implemented by connecting two physically-separate devices via radio or wire and using these multiple devices.

For example, part or all of the functions of the radio base station 10 and the user terminal 20 may be implemented by using hardware such as an ASIC (Application-Specific Integrated Circuit), a PLD (Programmable Logic Device), an FPGA (Field Programmable Gate Array) and so on. Also, the radio base stations 10 and user terminals 20 may be implemented with a computer device that includes a processor (CPU), a communication interface for connecting with networks, a memory and a computer-readable storage medium that holds programs. That is, the radio base stations and user terminals according to an embodiment of the present invention may function as computers that execute the processes of the radio communication method of the present invention.

Here, the processor and the memory are connected with a bus for communicating information. Also, the computer-readable recording medium is a storage medium such as, for example, a flexible disk, an opto-magnetic disk, a ROM (Read Only Memory), an EPROM (Erasable Programmable ROM), a CD-ROM (Compact Disc-ROM), a RAM (Random Access Memory), a hard disk and so on. Also, the programs may be transmitted from the network through, for example, electric communication channels. Also, the radio base stations 10 and user terminals 20 may include input devices such as input keys and output devices such as displays.

The functional structures of the radio base stations 10 and user terminals 20 may be implemented with the above-described hardware, may be implemented with software modules that are executed on the processor, or may be implemented with combinations of both. The processor controls the whole of the user terminals by running an operating system. Also, the processor reads programs, software modules and data from the storage medium into the memory, and executes various types of processes.

Here, these programs have only to be programs that make a computer execute each operation that has been described with the above embodiments. For example, the control section 401 of the user terminals 20 may be stored in the memory and implemented by a control program that operates on the processor, and other functional blocks may be implemented likewise.

Also, software and commands may be transmitted and received via communication media. For example, when software is transmitted from a website, a server or other remote sources by using wired technologies such as coaxial cables, optical fiber cables, twisted-pair cables and digital subscriber lines (DSL) and/or wireless technologies such as infrared radiation, radio and microwaves, these wired technologies and/or wireless technologies are also included in the definition of communication media.

Note that the terminology used in this description and the terminology that is needed to understand this description may be replaced by other terms that convey the same or similar meanings. For example, "channels" and/or "symbols" may be replaced by "signals" (or "signaling"). Also, "signals" may be "messages." Furthermore, "component carriers" (CCs) may be referred to as "carrier frequencies," "cells" and so on.

Also, the information and parameters described in this description may be represented in absolute values or in relative values with respect to a predetermined value, or may be represented in other information formats. For example, radio resources may be specified by indices.

The information, signals and/or others described in this description may be represented by using a variety of different technologies. For example, data, instructions, commands, information, signals, bits, symbols and chips, all of which may be referenced throughout the description, may be represented by voltages, currents, electromagnetic waves, magnetic fields or particles, optical fields or photons, or any combination of these.

The examples/embodiments illustrated in this description may be used individually or in combinations, and may be switched depending on the implementation. Also, a report of predetermined information (for example, a report to the effect that "X holds") does not necessarily have to be sent explicitly, and can be sent implicitly (by, for example, not reporting this piece of information).

Reporting of information is by no means limited to the example s/embodiments described in this description, and other methods may be used as well. For example, reporting of information may be implemented by using physical layer signaling (for example, DCI (Downlink Control Information) and UCI (Uplink Control Information)), higher layer signaling (for example, RRC (Radio Resource Control) signaling, MAC (Medium Access Control) signaling, and broadcast information (the MIB (Master Information Block) and SIBs (System Information Blocks))), other signals or combinations of these. Also, RRC signaling may be referred to as "RRC messages," and can be, for example, an RRC connection setup message, RRC connection reconfiguration message, and so on.

The examples/embodiments illustrated in this description may be applied to LTE (Long Term Evolution), LTE-A (LTE-Advanced), SUPER 3G, IMT-Advanced, 4G, 5G, FRA (Future Radio Access), CDMA 2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), and other adequate systems, and/or next-generation systems that are enhanced based on these.

The order of processes, sequences, flowcharts and so on that have been used to describe the examples/embodiments herein may be re-ordered as long as inconsistencies do not arise. For example, although various methods have been illustrated in this description with various components of steps in exemplary orders, the specific orders that illustrated herein are by no means limiting.

Now, although the present invention has been described in detail above, it should be obvious to a person skilled in the art that the present invention is by no means limited to the embodiments described herein. The present invention can be implemented with various corrections and in various modifications, without departing from the scope of the present invention defined by the recitations of claims. Consequently, the description herein is provided only for the purpose of explaining examples, and should by no means be construed to limit the present invention in any way.

## Claims

1. A user terminal (20) comprising:

   a transmission section (203) configured to transmit an uplink control channel (PUCCH); and
   a control section (204) configured to control transmission power of the uplink control channel,
   **characterized by** that
   the control section (204) is configured to control the transmission power of the uplink control channel based on at least one of a number of resource blocks (PRB) constituting a format of the uplink control channel and a payload in the format including a cyclic redundancy check (CRC) bit.

2. The user terminal (20) according to claim 1, wherein the control section (204) is configured to control the transmission power of the uplink control channel based on an offset that increases according to an increase in the number of resource blocks.

3. The User terminal (20) according to claim 1 or 2, wherein the control section (204) is configured to control the transmission power of the uplink control channel based on a payload per resource, which is calculated based on the number of resource blocks (PRB).

4. The user terminal (20) according to one of claims 1 to 3, wherein the control section (204) is configured to determine the number of resource blocks (PRB) based on reporting information by higher layer signaling.

5. The user terminal (20) according to any one of claims 1 to 4, wherein the payload is a number of bits including the CRC bit and a bit for at least one of delivery acknowledgement information, channel state information (CSI) and scheduling request (SR).

6. The user terminal (20) according to any one of claims 1 to 5, wherein the format that is able to use a plurality of resource blocks (PRB).

7. The user terminal (20) according to any one of claims 1 to 5, wherein a spreading factor of the format is 1.

8. A radio base station (10) comprising:

a receiving section (103) configured to receive an uplink control channel (PUCCH); and
a transmission section (103) configured to transmit reporting information by higher layer signaling and/or downlink control information by a downlink control channel,
**characterized by** that
transmission power of the uplink control channel (PUCCH) is controlled based on at least one of a number of resource blocks (PRB) constituting a format of the uplink control channel, and a payload in the format including a cyclic redundancy check (CRC) bit.

9. A radio communication method in a user terminal (20), the radio communication method comprising:

transmitting an uplink control channel; and
**characterized by** that
controlling transmission power of the uplink control channel based on at least one of a number of resource blocks (PRB) constituting a format of the uplink control channel and a payload in the format including a cyclic redundancy check (CRC) bit.

**Patentansprüche**

1. Anwenderendgerät (20), umfassend:

einen Übertragungsabschnitt (203), der so konfiguriert ist, dass er einen Uplink-Steuerkanal (PUCCH) überträgt; und
einen Steuerabschnitt (204), der so konfiguriert ist, dass er Übertragungsleistung des Uplink-Steuerkanals steuert,
**dadurch gekennzeichnet, dass**
der Steuerabschnitt (204) so konfiguriert ist, dass er die Übertragungsleistung des Uplink-Steuerkanals auf Basis von mindestens einem aus einer Anzahl von Ressourcenblöcken (PRB), die ein Format des Uplink-Steuerkanals bilden, und einer Nutzlast in dem Format, die ein zyklisches Redundanzprüf- (CRC) Bit einschließt, steuert.

2. Anwenderendgerät (20) nach Anspruch 1, wobei der Steuerabschnitt (204) so konfiguriert ist, dass er die Übertragungsleistung des Uplink-Steuerkanals auf Basis eines Versatzes steuert, der nach einer Zunahme der Anzahl von Ressourcenblöcken zunimmt.

3. Anwenderendgerät (20) nach Anspruch 1 oder 2, wobei der Steuerabschnitt (204) so konfiguriert ist, dass er die Übertragungsleistung des Uplink-Steuerkanals auf Basis einer Nutzlast pro Ressource steuert, die auf Basis der Anzahl von Ressourcenblöcken (PRB) berechnet wird.

4. Anwenderendgerät (20) nach einem der Ansprüche 1 bis 3, wobei der Steuerabschnitt (204) so konfiguriert ist, dass er die Anzahl von Ressourcenblöcken (PRB) auf Basis von Berichtsinformationen über Signalisierung auf höherer Schicht bestimmt.

5.  Anwenderendgerät (20) nach einem der Ansprüche 1 bis 4, wobei die Nutzlast eine Anzahl von Bits ist, die das CRC-Bit und ein Bit für mindestens eines aus Zustellungsbestätigungsinformationen, Kanalzustandsinformationen (CSI) und Planungs-anfrage (SR) einschließt.

6.  Anwenderendgerät (20) nach einem der Ansprüche 1 bis 5, wobei das Format das in der Lage ist, eine Vielzahl von Ressourcenblöcken (PRB) zu verwenden.

7.  Anwenderendgerät (20) nach einem der Ansprüche 1 bis 5, wobei ein Spreizfaktor des Formats 1 beträgt.

8.  Funkbasisstation (10), umfassend:

    einen Empfangsabschnitt (103), der so konfiguriert ist, dass er einen Uplink-Steuerkanal (PUCCH) empfängt; und
    einen Übertragungsabschnitt (103), der so konfiguriert ist, dass er Berichtsinformationen über Signalisierung auf höherer Schicht und/oder Downlink-Steuerinformationen über einen Downlink-Steuerkanal überträgt,
    **dadurch gekennzeichnet, dass**
    die Übertragungsleistung des Uplink-Steuerkanals (PUCCH) auf Basis von mindestens einem aus einer Anzahl von Ressourcenblöcken (PRB), die ein Format des Uplink-Steuerkanals bilden, und einer Nutzlast in dem Format, die ein zyklisches Redundanzprüf- (CRC) Bit einschließt, gesteuert wird.

9.  Funkkommunikationsverfahren in einem Anwenderendgerät (20), wobei das Funkkommunikationsverfahren umfasst:

    Übertragen eines Uplink-Steuerkanals; und
    **dadurch gekennzeichnet, dass**
    das Steuern von Übertragungsleistung des Uplink-Steuerkanals auf Basis von mindestens einem aus einer Anzahl von Ressourcenblöcken (PRB), die ein Format des Uplink-Steuerkanals bilden, und einer Nutzlast in dem Format, ein zyklisches Redundanzprüf- (CRC) Bit einschließt.

**Revendications**

1.  Terminal utilisateur (20) comprenant :

    une section de transmission (203) configurée pour transmettre un canal de commande de liaison montante (PUCCH) ; et
    une section de commande (204) configurée pour commander une puissance de transmission du canal de commande de liaison montante,
    **caractérisé en ce que**
    la section de commande (204) est configurée pour commander la puissance de transmission du canal de commande de liaison montante sur la base d'au moins un parmi un nombre de blocs de ressource (PRB) constituant un format du canal de commande de liaison montante et une charge utile dans le format incluant un bit de contrôle de redondance cyclique (CRC).

2.  Terminal utilisateur (20) selon la revendication 1, dans lequel la section de commande (204) est configurée pour commander la puissance de transmission du canal de commande de liaison montante sur la base d'un décalage qui augmente en fonction d'une augmentation du nombre de blocs de ressource.

3.  Terminal utilisateur (20) selon la revendication 1 ou 2, dans lequel la section de commande (204) est configurée pour commander la puissance de transmission du canal de commande de liaison montante sur la base d'une charge utile par ressource, qui est calculée sur la base du nombre de blocs de ressource (PRB).

4.  Terminal utilisateur (20) selon une des revendications 1 à 3, dans lequel la section de commande (204) est configurée pour déterminer le nombre de blocs de ressource (PRB) sur la base d'informations de rapport par une signalisation de couche supérieure.

**5.** Terminal utilisateur (20) selon l'une quelconque des revendications 1 à 4, dans lequel la charge utile est un nombre de bits incluant le bit CRC et un bit pour au moins une parmi une information d'accusé de réception de livraison, une information d'état de canal (CSI) et une demande de planification (SR).

**6.** Terminal utilisateur (20) selon l'une quelconque des revendications 1 à 5, dans lequel le format qui est adapté pour utiliser une pluralité de blocs de ressource (PRB).

**7.** Terminal utilisateur (20) selon l'une quelconque des revendications 1 à 5, dans lequel un facteur d'étalement du format est 1.

**8.** Station de base radio (10) comprenant :

une section de réception (103) configurée pour recevoir un canal de commande de liaison montante (PUCCH) ; et une section de transmission (103) configurée pour transmettre des informations de rapport par signalisation de couche supérieure et/ou des informations de commande de liaison descendante par un canal de commande de liaison descendante,
**caractérisée en ce que**
une puissance de transmission du canal de commande de liaison montante (PUCCH) est commandée sur la base d'au moins un parmi un nombre de blocs de ressource (PRB) constituant un format du canal de commande de liaison montante et une charge utile dans le format incluant un bit de contrôle de redondance cyclique (CRC).

**9.** Procédé de radiocommunication dans un terminal utilisateur (20), le procédé de radiocommunication comprenant :

la transmission d'un canal de commande de liaison montante ; et
**caractérisé en ce que**
la commande d'une puissance de transmission du canal de commande de liaison montante sur la base d'au moins un parmi un nombre de blocs de ressource (PRB) constituant un format du canal de commande de liaison montante et une charge utile dans le format incluant un bit de contrôle de redondance cyclique (CRC).

FIG. 1

SLOT

PRB

PUCCH format 3

SC-FDMA SYMBOL

SUBFRAME

UCI

DMRS

FIG. 2

FIG. 3A

UCI    DMRS

FIG. 3B

UCI    DMRS

EP 3 306 989 B1

UCI          DMRS

FIG. 4B

UCI          DMRS

24

FIG. 5A

CODE-DIVISION-MULTIPLEXED UCI OF MULTIPLE UEs

CODE-DIVISION-MULTIPLEXED DMRS OF MULTIPLE UEs

FIG. 5B

UCI OF UE 1      DMRS OF UE 1

UCI OF UE 2      DMRS OF UE 2

FIG. 6A

UCI    DMRS

FIG. 6B

UCI    UCI    DMRS

UCI    UCI

UCI

FIG. 7A

1PRB

TRANSMISSION POWER A [dBm]

FIG. 7B

2PRBs

TRANSMISSION POWER A + 3 [dBm]

## FIG. 8A

20bits/2PRBs

CALCULATED AS 10 BITS/PRB

## FIG. 8B

40bits/2PRBs

CALCULATED AS 20 BITS/PRB

RECEIVED QUALITY

$\alpha < 1$

$\alpha = 1$

PATH LOSS　[dB]

FIG. 9

FIG. 10

EP 3 306 989 B1

FIG. 11

31

FIG. 12

EP 3 306 989 B1

104

COMMUNICATION
PATH INTERFACE 106 ⟷

| 301 |
| --- |
| CONTROL<br>SECTION |

→

| 302 |
| --- |
| TRANSMISSION<br>SIGNAL<br>GENERATING<br>SECTION |

→

| 303 |
| --- |
| MAPPING<br>SECTION |

→ TRANSMITTING
/RECEIVING
SECTION 103

| 304 |
| --- |
| RECEIVED SIGNAL<br>PROCESSING<br>SECTION |

← TRANSMITTING/
RECEIVING
SECTION 103

FIG. 13

FIG. 14

EP 3 306 989 B1

FIG. 15

EP 3 306 989 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 2012208583 A1

**Non-patent literature cited in the description**

• Evolved Universal Terrestrial Radio Access (E-UTRA) and Evolved Universal Terrestrial Radio Access Network (E-UTRAN); Overall description; Stage 2. *3GPP TS 36.300 Rel.8*